# EUROPÄISCHE PATENTSCHRIFT

(11) **EP 3 975 662 B1**
(45) Veröffentlichungstag und Bekanntmachung des Hinweises auf die Patenterteilung: **07.06.2023**
(21) Anmeldenummer: 21194057.2
(22) Anmeldetag: 31.08.2021
(51) Int. Cl.: H05B 6/06

(54) **VERFAHREN ZUR BESTIMMUNG EINER TOPFPOSITION EINES TOPFES AUF EINEM KOCHFELD UND KOCHFELD**
COOKING SURFACE AND METHOD FOR DETERMINING THE POSITION OF A POT ON A COOKING SURFACE
PROCÉDÉ DE DÉTERMINATION D'UNE POSITION D'UNE MARMITTE SUR UNE PLAQUE DE CUISSON ET PLAQUE DE CUISSON

(30) Priorität: 28.09.2020 DE 102020212169
(43) Veröffentlichungstag der Anmeldung: 30.03.2022
(73) Patentinhaber: E.G.O. Elektro-Gerätebau GmbH, 75038 Oberderdingen (DE)
(72) Erfinder: Berner, Jonathan, 71665 Vaihingen an der Enz (DE); Frank, Marcus, 75056 Sulzfeld (DE); Lehner, Marius, 75417 Mühlacker (DE)
(74) Vertreter: Patentanwälte Ruff, Wilhelm, Beier, Dauster & Partner mbB

(56) Entgegenhaltungen:
- EP-A1- 3 001 771
- EP-A1- 3 396 453
- DE-A1-102004 044 395

## Beschreibung

### ANWENDUNGSGEBIET UND STAND DER TECHNIK

Die Erfindung betrifft ein Verfahren zur Bestimmung einer Topfposition eines Topfes auf einem Kochfeld, insbesondere wenn der Topf ein sogenannter smarter oder intelligenter Topf ist mit einem Zusatzmodul daran, das Temperaturen erfassen und an eine Kochfeldsteuerung senden kann. Die Erfindung betrifft auch ein entsprechendes Kochfeld.

Aus der genannten EP 3 001 771 A1 ist ein solcher Topf bekannt, der in einem Modul eine Temperaturmessung am Topf, möglicherweise auch zur Erfassung weiterer Werte, ermöglicht. Der Topf bzw. das Modul weisen eine Art Gegen-Kommunikationseinrichtung auf, die mit einer Kommunikationseinrichtung eines Kochfelds kommunizieren bzw. Daten austauschen kann. Dazu gehören neben einer individuellen Kennung für den Topf eben auch die Temperaturdaten. Wichtig dabei ist die eindeutige Erkennung nicht nur des individuellen Topfes sondern auch dessen Position auf dem Kochfeld bzw. über einer Heizeinrichtung des Kochfelds. So kann sichergestellt werden, dass dann mit dieser bestimmten Heizeinrichtung des Kochfelds auch tatsächlich dieser Topf beheizt wird, so dass beispielsweise automatische Kochprogramme des Kochfelds genau geregelt ablaufen können.

Aus der DE 10 2020 201 005.6 mit Anmeldetag vom 28. Januar 2020 von derselben Anmelderin ist ein Verfahren zur Bestimmung einer Topfposition eines solchen Topfes auf einem Kochfeld bekannt. Dabei erfasst ein Vibrationssensor am Topf ein Beheizen dieses Topfes mit einer Induktionsheizspule als Heizeinrichtung. Durch jeweils unterschiedlichen Betrieb der Induktionsheizspulen des Kochfelds werden unterschiedliche Muster an Vibrationen erzeugt, die dann von einem über einer bestimmten Induktionsheizspule aufgesetzten Topf mit einem solchen Vibrationssensor eindeutig erkannt werden können. Dies ermöglicht die eindeutige Bestimmung der Topfposition dieses Topfes über einer bestimmten Induktionsheizspule.

Eine nochmals weitere ähnliche Möglichkeit ist aus der DE 10 2018 221 521 A1 bekannt. Hier werden ebenfalls Induktionsheizspulen mit einem bestimmten Muster angesteuert. Dies dient aber nicht dazu, die dadurch bewirkten Vibrationen an einem darüber aufgestellten Topf sofort erkennen zu können, sondern um mit einem am Topf vorgesehenen Temperatursensor einen Temperaturanstieg oder Temperaturänderungen am Topf, der dann zu dem Muster der Heizleistungserzeugung passen sollten, erkennen zu können.

Aus der DE 10 2004 044 395 A1 ist ein Kochfeld bekannt mit einer Sensoreinrichtung, um Objekte auf einer Kochfeldplatte berührungslos zu erfassen und ein entsprechendes Sensorsignal bereitzustellen. Dies können insbesondere Töpfe als Objekte sein. Hierzu kann ein optisches und/oder akustisches Signal verwendet werden. Ein solches Signal kann als gestreutes Signal oder als reflektiertes Signal detektiert werden, woraus dann eine Position des Objekts bzw. Topfes bestimmt werden kann.

Aus der EP 3 396 453 A1 ist ein weiteres Kochfeld bekannt, mit dem die Position eines Topfes auf einer Kochfeldplatte erfasst werden kann. Dies erfolgt mittels Lichtstrahlung, die von einem Licht-Sender ausgestrahlt wird und von einer MEMS-Vorrichtung als Spiegel auf einen Topf gelenkt werden kann. Dort wird das Licht reflektiert und fällt über die MEMS-Vorrichtung auf einen Licht-Empfänger. Aus dem reflektierten Licht kann auf das Vorhandensein eines Topfes und auf dessen Position geschlossen werden.

### AUFGABE UND LÖSUNG

Der Erfindung liegt die Aufgabe zugrunde, ein eingangs genanntes Verfahren und ein eingangs genanntes Kochfeld zu schaffen, mit denen Probleme des Standes der Technik gelöst werden können und es insbesondere möglich ist, eine Topfposition eines Topfes mit einer vorgenannten Gegen-Kommunikationseinrichtung an einem Kochfeld sicher und praxistauglich erkennen zu können.

Gelöst wird diese Aufgabe durch ein Verfahren mit den Merkmalen des Anspruchs 1 sowie durch ein zur Durchführung dieses Verfahrens geeignetes Kochfeld mit den Merkmalen des Anspruchs 15. Vorteilhafte sowie bevorzugte Ausgestaltungen der Erfindung sind Gegenstand der weiteren Ansprüche und werden im Folgenden näher erläutert. Dabei werden manche der Merkmale nur für das Verfahren oder nur für das Kochfeld beschrieben. Sie sollen jedoch unabhängig davon sowohl für das Verfahren als auch für das Kochfeld selbstständig und unabhängig voneinander gelten können. Der Wortlaut der Ansprüche wird durch ausdrückliche Bezugnahme zum Inhalt der Beschreibung gemacht.

Das Kochfeld weist eine Kochfeldplatte zum Aufstellen des Topfes oder von Töpfen auf sowie mehrere Heizeinrichtungen, die nebeneinander unter der Kochfeldplatte angeordnet sind. Hierfür gibt es mehrere Möglichkeiten, wie sie nachfolgend noch näher erläutert werden. Vorteilhaft werden Induktionsheizspulen als Heizeinrichtungen verwendet, dies muss aber nicht zwingend so sein. Des Weiteren weist das Kochfeld eine Kochfeldsteuerung, eine Haupt-Kommunikationseinrichtung und vorteilhaft noch eine Bedieneinrichtung dazu auf. Diese Haupt-Kommunikationseinrichtung weist einen Sender und einen Empfänger auf, die dazu ausgebildet sind, mit einem Topf mit einer Gegen-Kommunikationseinrichtung zu kommunizieren. Dieser entspricht vorteilhaft einem Topf aus dem eingangs genannten Stand der Technik. Des Weiteren kann die Haupt-Kommunikationseinrichtung einen Abstand zwischen sich und der Gegen-Kommunikationseinrichtung messen, vorteilhaft mittels einer Art Laufzeitmessung, was aber nicht zwingend ist. Die Haupt-Kommunikationseinrichtung ist, wie auch sämtliche Kommunikationseinrichtungen des Kochfelds, dazu ausgebildet, ein drahtloses Kommunikationsprotokoll zu verwenden bzw. mit Funk, insbesondere mit Bluetooth, zu arbeiten, besonders vorteilhaft mit BLE. Es kann auch per Funk mit Ultra Wide Band gemessen werden. Außerdem kann die Haupt-Kommunikationseinrichtung eine individuelle Kennung der Gegen-Kommunikationseinrichtung empfangen, also vom Topf, und in der Kochfeldsteuerung abspeichern, alternativ in einem eigenen Speicher. Sämtliche Gegen-Kommunikationseinrichtungen verschiedener Töpfe sollten somit unterschiedliche individuelle Kennungen aufweisen, was aus dem Stand der Technik bekannt ist und keine Schwierigkeit darstellt. Bevorzugt gehört die Haupt-Kommunikationseinrichtung zu der Kochfeldsteuerung und/oder wird von dieser gesteuert. Sie braucht nicht zwingend räumlich in die Kochfeldsteuerung, auf Leiterplatten oder in ein Gehäuse davon integriert zu sein, aber sie wird funktional als Teil davon angesehen.

Bei dem Verfahren werden die folgenden Schritte durchgeführt. Das Kochfeld und die Haupt-Kommunikationseinrichtung sind oder werden eingeschaltet, ebenso eine Topferkennungseinrichtung des Kochfelds. Ein Topf mit einer Gegen-Kommunikationseinrichtung darin oder daran ist auf der Kochfeldplatte aufgestellt oder wird darauf aufgestellt, beides insbesondere in beliebiger Position. Das Vorhandensein bzw. das Aufsetzen des Topfes auf der Kochfeldplatte wird erkannt, wozu vorteilhaft die genannte Topferkennungseinrichtung dient. Auf diese Topferkennungseinrichtung wird nachfolgend noch näher eingegangen. Nach dem Erkennen des Vorhandenseins oder des Aufsetzens des Topfes auf der Kochfeldplatte wird ein Abstand zwischen der Haupt-Kommunikationseinrichtung und der Gegen-Kommunikationseinrichtung des Topfes gemessen. Mit dem gemessenen Abstand zwischen der Haupt-Kommunikationseinrichtung und der Gegen-Kommunikationseinrichtung erfolgt eine Bestimmung der Topfposition des Topfes auf dem Kochfeld. Dies kann mit verschiedenen mathematischen Möglichkeiten erfolgen sowie vorteilhaft zusätzlich mit weiteren Messungen und/oder Plausibilitätsprüfungen. Die individuelle Kennung der Gegen-Kommunikationseinrichtung wird von der Haupt-Kommunikationseinrichtung empfangen und zusammen mit der bestimmten Topfposition in der Kochfeldsteuerung, alternativ in der Haupt-Kommunikationseinrichtung, abgespeichert.

Somit erfolgt im Wesentlichen und hauptsächlich die Bestimmung der Topfposition des Topfes mit der Haupt-Kommunikationseinrichtung mittels der Abstandsmessung. Weitere Prüfungen bzw. Messungen werden nachfolgend noch als Optionen beschrieben. Auf die genannte Art und Weise kann sicher und zuverlässig sowie auch relativ schnell, insbesondere in wenigen Sekunden oder noch schneller, eine Position eines Topfes mit einer Gegen-Kommunikationseinrichtung auf dem Kochfeld bestimmt werden. Zwar kann allgemein eine Topfposition auch mit der Topferkennungseinrichtung erkannt werden, aber gerade für die Verwendung von automatischen Kochprogrammen für einen solchen sogenannten intelligenten Topf mit Gegen-Kommunikationseinrichtung muss sichergestellt sein, dass eine Zuordnung der individuellen Kennung dieses Topfes zu der Topfposition für die Kochfeldsteuerung bekannt und sichergestellt ist.

Vorteilhaft kann die Topferkennungseinrichtung in das Kochfeld integriert sein, insbesondere mittels allgemein bekannter Topferkennungssensoren, die unterschiedlich arbeiten können. Besonders vorteilhaft werden hierfür Induktionsheizspulen als Heizeinrichtungen verwendet, die bekanntermaßen selbst als Topferkennungseinrichtung arbeiten können. Sie können zwar möglicherweise nicht eine exakte Topfposition auf wenige cm genau erfassen, hierfür kann die Kochfeldsteuerung aber die erfindungsgemäße Abstandsmessung heranziehen. Alternativ könnte eine Topferkennungseinrichtung auch außerhalb des Kochfelds angeordnet sein, beispielsweise mittels externer Sensoren oder einer externen Videokamera, die beispielsweise oberhalb des Kochfelds angeordnet ist. Hierfür bieten sich Oberschränke und/oder eine Dunstabzugshaube an.

In Ausgestaltung der Erfindung ist vorteilhaft vorgesehen, dass die Gegen-Kommunikationseinrichtung bei dem Topf in der Projektionsrichtung oder in Draufsicht von oben einen Abstand von weniger als 2 cm, insbesondere weniger als 1 cm, zu einem Flächenmittelpunkt einer Aufstandfläche des Topfes auf der Kochfeldplatte aufweist. Dies hat nicht nur den Vorteil einer allgemeinen genauen Zuordnung der Gegen-Kommunikationseinrichtung zu dem Topf, sondern auch einer Zuordnung, bei der sich ein Drehen oder verdrehtes Aufsetzen des Topfes nicht negativ auf die Topfposition bzw. die Abstandsmessung auswirkt. Die Gegen-Kommunikationseinrichtung kann auf bekannte Art und Weise am Topf angeordnet sein mit dieser Maßgabe, also entweder in einem Topfboden, was üblicherweise aus thermischen Gründen schwierig ist, oder auf dem Topfboden oder vorteilhaft an einem Deckel für den Topf. Auch wenn der Deckel eigentlich separat von dem Topf ist und entfernt werden kann, so wird die Kombination von Topf und Deckel für diese Erfindung als Topf angesehen.

In Weiterbildung der Erfindung kann vorgesehen sein, dass entweder eine Bedienperson durch eine manuelle Aktion das Bestimmen einer Topfposition startet bzw. auslöst, beispielsweise weil sie einen solchen Topf mit einer Gegen-Kommunikationseinrichtung auf das Kochfeld aufgestellt hat. Alternativ und vorteilhaft kann dies sozusagen automatisch ausgelöst werden, beispielsweise weil mittels der Topferkennungseinrichtung ein Vorhandensein oder ein Aufsetzen eines Topfes erkannt worden ist. Dies nimmt der Bedienperson den Aufwand des Startens ab.

In einer ersten möglichen Ausgestaltung der Erfindung weisen die Heizeinrichtungen des Kochfelds zueinander einen Abstand von mindestens 4 cm auf. Es handelt sich also um ein sozusagen klassisches Kochfeld mit separaten und verteilten Heizeinrichtungen, wobei vorteilhaft die Heizeinrichtungen dazu ausgebildet sind, einen darüber aufgestellten Topf als einzige Heizeinrichtung zu beheizen. Möglicherweise können es sogenannte Zweikreis-Heizeinrichtungen sein, die sich sozusagen vergrößern können, um auch größere Töpfe beheizen zu können. Dann sind darunter aber explizit keine sogenannten Flächenkochfelder mit vielen flächendeckend vorgesehenen Heizeinrichtungen zu verstehen, bei denen üblicherweise oder sogar zwingend mindestens zwei oder drei Heizeinrichtungen zusammen einen Topf beheizen müssen, weil sie so klein sind.

Der Abstand jedes Mittelpunkts jeder Heizeinrichtung zu der Haupt-Kommunikationseinrichtung ist bekannt und abgespeichert, vorteilhaft in der Kochfeldsteuerung. Dieser Abstand ist bei jeder Heizeinrichtung unterschiedlich, so dass sie bzw. ihre Positionen gut unterschieden werden können. Vorteilhaft ist dieser Abstand bei jeder Heizeinrichtung um mindestens 2 cm unterschiedlich, so dass auch bei einer nicht allzu genauen Abstandsmessung eine gute Unterscheidung möglich ist. Dann wird in einem Schritt der gemessene Abstand zwischen Haupt-Kommunikationseinrichtung und Gegen-Kommunikationseinrichtung mit den bekannten Abständen der Mittelpunkte der Heizeinrichtungen zu der Haupt-Kommunikationseinrichtung verglichen. Dabei wird vorteilhaft noch rechnerisch berücksichtigt, dass der Abstand der Mittelpunkte der Heizeinrichtung zu der Haupt-Kommunikationseinrichtung im Wesentlichen horizontal verläuft und tatsächlich immer völlig fix ist. Der Abstand der Gegen-Kommunikationseinrichtung zu der Haupt-Kommunikationseinrichtung verläuft aber eigentlich immer winklig bzw. schräg, und je nach Höhe eines Topfes können die Schräge und somit auch der Abstand variieren. Hier kann vorgesehen sein, dass jeder Deckel mit einer Gegen-Kommunikationseinrichtung nur für genau einen einzigen Topf verwendet werden kann oder verwendet werden soll, so dass die Höhe der Gegen-Kommunikationseinrichtung über der Kochfeldplatte bekannt ist. Ein davon bestimmter numerischer Wert kann von der Gegen-Kommunikationseinrichtung an die Kochfeldsteuerung gesendet werden oder aber in der individuellen Kennung bereits verwertbar enthalten sein, so dass die Kochfeldsteuerung diese nachteilige Beeinflussung sozusagen selbsttätig herausrechnen und korrigieren kann. So kann auf einfache Art mit trigonometrischen Formeln anhand des tatsächlichen Abstands der Gegen-Kommunikationseinrichtung zu der Haupt-Kommunikationseinrichtung der Abstand des Mittelpunkts des Topfes an der Aufstandfläche zu der Haupt-Kommunikationseinrichtung bestimmt werden.

Dann wird der Topf als auf derjenigen Heizeinrichtung positioniert angesehen, bei der der Abstand zwischen ihrem Mittelpunkt und Haupt-Kommunikationseinrichtung die geringste Differenz aufweist zu dem Abstand zwischen Haupt-Kommunikationseinrichtung und Gegen-Kommunikationseinrichtung, gegebenenfalls korrigiert wie zuvor beschrieben. Dann weiß die Kochfeldsteuerung, dass der Topf mit der speziellen individuellen Kennung auf genau dieser Heizeinrichtung positioniert ist, und kann ihn sicher betreiben, vorteilhaft mit einem vorgenannten Automatikprogramm mit Temperaturregelung. Die Temperatursignale betreffen also einen Topf auf genau dieser Heizeinrichtung.

Das Kochfeld kann vier, sechs oder acht solche Heizeinrichtungen aufweisen. Sie können besonders vorteilhaft gleich groß und/oder gleichartig ausgebildet sein, wobei sie bei gleichartiger Ausbildung auch unterschiedliche Größen aufweisen können, wie dies von herkömmlichen Kochfeldern bekannt ist zum Beheizen jeweils unterschiedlich großer Töpfe.

Diese erste Ausgestaltung der Erfindung beinhaltet vorteilhaft, dass die Bestimmung der Topfposition nur dann möglich ist und ausgeführt wird, wenn nur ein einziger Topf mit einer Gegen-Kommunikationseinrichtung auf dem ganzen Kochfeld positioniert ist. In vorteilhafter Ausgestaltung wird sie nur dann ausgeführt, wenn überhaupt nur ein einziger Topf auf dem Kochfeld positioniert ist, was mittels der Topferkennungseinrichtung erkannt werden kann. Dann ist nämlich eine Störung der einzigen Abstandsmessung nicht möglich durch andere aufgestellte Töpfe. Ist die Topfposition und Zuweisung der Topfposition samt individueller Kennung einmal erfolgt, können auch weitere Töpfe ohne Gegen-Kommunikationseinrichtung auf das Kochfeld aufgestellt und dort beheizt werden. Die Abstandsmessung muss dann nicht noch einmal wiederholt werden, insbesondere solange der Topf mit Gegen-Kommunikationseinrichtung nicht zu lange von der Heizeinrichtung abgenommen wird.

In einer Variante dieser ersten Ausgestaltung der Erfindung kann vorgesehen sein, dass auf der Kochfeldplatte eine bestimmte vorgegebene Start-Position, insbesondere eine einzige Start-Position, für einen Topf vorgesehen ist, der aufzusetzen ist und erkannt werden soll. Dann kann nämlich die Topfposition zusammen mit Empfangen einer bestimmten individuellen Kennung dieses Topfes bzw. dessen Gegen-Kommunikationseinrichtung mit der bekannten Start-Position oder deren Abstand verglichen werden. Es ist also sehr einfach für die Kochfeldsteuerung, bei Empfangen einer bestimmten individuellen Kennung eines Topfes bzw. seiner Gegen-Kommunikationseinrichtung mittels der Abstandsmessung zu überprüfen, ob er an der bestimmten vorgegebenen Start-Position steht. Dann kann dies als vorübergehende Topfposition zusammen mit der individuellen Kennung von der Kochfeldsteuerung abgespeichert werden. An der Start-Position muss noch keine Beheizung bzw. Heizeinrichtung vorgesehen sein, insbesondere ist sie es nicht. Der Topf kann nämlich dann nach seiner Erkennung von der Start-Position auf eine von der Bedienperson gewünschte Position über eine Heizeinrichtung verschoben werden. Dies kann von der jeweiligen Topferkennungseinrichtung erkannt und überprüft werden hinsichtlich eines zeitlichen Kontextes, insbesondere innerhalb von weniger als 3 sec oder weniger als 5 sec. Mittels einer Abstandsmessung kann dies dann noch verifiziert werden, wobei dann die Abstandsmessung nicht sehr genau sein muss. Im Wesentlichen kann sie dahingehend abgeprüft werden, dass das Ergebnis der Abstandsmessung der vermuteten neuen Position dieses Topfes nicht deutlich widerspricht. Hier ist dann die Abstandsmessung an der zweiten endgültigen Topfposition als Plausibilitätsprüfung vorgesehen.

Bei dieser ersten Ausgestaltung der Erfindung ist es dann möglich, dass nach diesem ersten Topf ein zweiter Topf mit Gegen-Kommunikationseinrichtung auf dieselbe Art und Weise erkannt wird, beginnend mit einem Aufsetzen in der Start-Position. Die Start-Position kann und sollte dabei so gewählt werden, dass die Abstandsmessung zu ihr nicht von bereits vorschriftsmäßig aufgestellten Töpfen verfälscht oder behindert werden kann.

In einer zweiten Ausgestaltung der Erfindung sind mehrere Zusatz-Kommunikationseinrichtungen im Kochfeld unter der Kochfeldplatte angeordnet, insbesondere ähnlich wie die Haupt-Kommunikationseinrichtung. Diese weiteren Zusatz-Kommunikationseinrichtungen sind zur Abstandsmessung auf dieselbe Art und Weise wie die Haupt-Kommunikationseinrichtung ausgebildet. Sie können auch dazu ausgebildet sein, mit einer Gegen-Kommunikationseinrichtung zu kommunizieren, beispielsweise zum Empfangen von Signalen bzw. deren individueller Kennung. Dies wird aber als weniger vorteilhaft angesehen, eigentlich sollte die Haupt-Kommunikationseinrichtung mit den Gegen-Kommunikationseinrichtungen kommunizieren bzw. Daten austauschen, vorteilhaft nur die Haupt-Kommunikationseinrichtung. Dann sind die Zusatz-Kommunikationseinrichtungen nur zur Abstandsmessung verwendet bzw. ausgebildet. Ein solches Kochfeld unterscheidet sich also in seinem Aufbau deutlich von demjenigen der ersten Ausführung der Erfindung. Damit ist es möglich, den Abstand der Gegen-Kommunikationseinrichtung an der Topfposition zur Haupt-Kommunikationseinrichtung und zusätzlich zu mindestens einer Zusatz-Kommunikationseinrichtung zu bestimmen, insbesondere zusätzlich zu mehreren oder sämtlichen Zusatz-Kommunikationseinrichtungen. Aus diesen mehreren Abständen kann dann bei bekannter Position der Haupt- sowie der Zusatz-Kommunikationseinrichtungen im Kochfeld die Topfposition auf der Kochfeldplatte berechnet werden. Auch hierfür kann wiederum eine mathematische Korrektur der Höhe in vertikaler Richtung der Gegen-Kommunikationseinrichtung vorgenommen werden, wie zuvor beschrieben. Hier ist also der technische Aufwand für das Kochfeld etwas höher, da eben noch die Zusatz-Kommunikationseinrichtungen vorgesehen und eingebaut sowie angeschlossen und angesteuert werden müssen. Eine Sicherheit bei der Erkennung einer Topfposition kann jedoch höher sein bzw. diese kann sicherer erkannt werden.

In Weiterbildung dieser Ausgestaltung sind mindestens zwei, vorzugsweise mindestens drei, Zusatz-Kommunikationseinrichtungen in dem Kochfeld angeordnet. Eine Bestimmung der Topf-position anhand der Abstandsmessungen kann mittels Triangulation bzw. Trigonometrie erfolgen. Dabei kann auch vorgesehen sein, dass aufgrund bekannter aufgestellter Töpfe auf Heizeinrichtungen, was mittels einer Topferkennungseinrichtung erkannt werden kann, bestimmte Kommunikationseinrichtungen von einer Abstandsmessung ausgeschlossen werden, da bekannt und offensichtlich ist, dass hier ein Topf im Weg steht. In dieser Hinsicht kann es von besonderem Vorteil sein, wenn das Kochfeldgehäuse rechteckig ist und die Kommunikationseinrichtungen, vorteilhaft sämtliche Kommunikationseinrichtungen des Kochfelds, einen Abstand von weniger als 5 cm oder weniger als 2 cm zu den Ecken des Kochfeldgehäuses aufweisen.

Dann kann in der Regel davon ausgegangen werden, dass mindestens zwei Kommunikationseinrichtungen eine unblockierte bzw. ungehinderte und somit unverfälschte Abstandsmessung zu einer Gegen-Kommunikationseinrichtung durchführen können. Alternativ dazu könnten die Kommunikationseinrichtungen an den Mitten der Längsseiten des rechteckigen Kochfeldgehäuses angeordnet sein, da sie dann eine sozusagen bessere, weil unverstellte Abstandsmessung durchführen können.

In weiterer Ausgestaltung der Erfindung kann die Haupt-Kommunikationseinrichtung, vorzugsweise auch mindestens eine der Zusatz-Kommunikationseinrichtungen, dazu ausgebildet sein, eine Richtung bzw. einen Winkel eines Signals von der Gegen-Kommunikationseinrichtung des Topfes zu der Haupt-Kommunikationseinrichtung zu ermitteln. Dies ist eine sogenannte Angle of arrival Technologie, so dass bei fester Anordnung der Haupt-Kommunikationseinrichtung bzw. der Zusatz-Kommunikationseinrichtung der Winkel bestimmt werden kann, unter dem eine gerade Signallinie von der Gegen-Kommunikationseinrichtung zu der Haupt-Kommunikationseinrichtung bzw. der Zusatz-Kommunikationseinrichtung verläuft. Dann kann zusammen mit der vorgenannten Abstandsmessung geometrisch berechnet werden, wo genau die Gegen-Kommunikationseinrichtung und somit der zugehörige Topf auf die Kochfeldplatte aufgestellt ist. Dies kann entweder nur mit der Haupt-Kommunikationseinrichtung gemacht werden, oder zur Sicherheit auch noch genauso mit einer Zusatz-Kommunikationseinrichtung, falls eine solche vorhanden ist, natürlich mit einem anderen Winkel bzw. einer anderen Signallinie ausgehend von der Gegen-Kommunikationseinrichtung.

In nochmals weiterer Ausgestaltung der Erfindung kann die Haupt-Kommunikationseinrichtung dazu ausgebildet sein, mittels einer oder mehrerer Antennen, die sie aufweist, die Gegen-Kommunikationseinrichtung an einem Topf auf der Kochfeldplatte in einer vorgegebenen Raumrichtung anzusprechen. Dies erfolgt in einem vorgegeben Zeitraum in einer variablen Signalstärke. Damit kann, ähnlich wie zuvor beschrieben, der Winkel einer geraden Signallinie von der Gegen-Kommunikationseinrichtung zu der Haupt-Kommunikationseinrichtung bzw. der Zusatz-Kommunikationseinrichtung bestimmt werden. So kann je nach Verwendung einer der Antennen eine entsprechende Raumrichtung abgesucht werden. Durch die variable Signalstärke kann eine Unterscheidung zwischen den einzelnen Antennen erfolgen. So kann wiederum zusammen mit der vorgenannten Abstandsmessung geometrisch berechnet werden, wo genau die Gegen-Kommunikationseinrichtung bzw. der zugehörige Topf auf die Kochfeldplatte aufgestellt ist.

Hier ist es dann möglich, dass mehrere Töpfe mit jeweils einer Gegen-Kommunikationseinrichtung auf der Kochfeldplatte positioniert sind und sozusagen gleichzeitig aufgestellt werden können. Deren Topfposition wird dann vorteilhaft nacheinander bestimmt. Eine Reihenfolge kann beliebig sein, möglicherweise kann auch bei dem Topf begonnen werden, dessen Vorhandensein oder Aufstellen auf die Kochfeldplatte zuerst erkannt worden ist oder dessen individuelle Kennung zuerst von der Haupt-Kommunikationseinrichtung empfangen worden ist.

In vorteilhafter Weiterbildung kann vorgesehen sein, dass während der Bestimmung der Topfposition eines bestimmten Topfes mit einer Gegen-Kommunikationseinrichtung die anderen Gegen-Kommunikationseinrichtungen der anderen Töpfe an der Abstandsmessung nicht teilnehmen. Sie können also sequenziell abgearbeitet werden.

Vorteilhaft kann bei der Erfindung vorgesehen sein, dass die individuelle Kennung eines Topfes nicht nur häufiger oder in wiederkehrenden Abständen gesendet wird, sondern auch bei einer genannten Laufzeitmessung für die Abstandsmessung bereits enthalten ist. Dann kann eine nochmals sicherere Abstandsmessung erfolgen. Es ist nämlich stets sichergestellt, welches Signal für eine Abstandsmessung von welchem Topf kommt.

In nochmaliger Weiterbildung der Erfindung kann vorgesehen sein, dass in einem weiteren Schritt als eine Art Plausibilitätsüberprüfung von einer Heizeinrichtung, über der der Topf positioniert erkannt worden ist oder bestimmt worden ist, ein bestimmtes Muster an Heizleistung erzeugt wird. Bei diesem Muster können Zeit und/oder Höhe der Heizleistung variieren. Dieses Muster wird dann mit einer Temperaturmessung am Topf verglichen. In dem Fall, dass das Muster der Temperaturerfassung am Topf nicht zu dem Muster der Erzeugung von Heizleistung für die Heizeinrichtung passt, über der der Topf als positioniert angenommen oder bestimmt worden ist, gibt es sozusagen einen Fehler. Die Topfposition dieses Topfes wird dann als nicht bekannt angenommen, möglicherweise laufende Automatikprogramme werden gestoppt. Gegebenenfalls wird eine Bedienperson über diesen Fehler informiert und zur neuen Bestimmung der Topfposition aufgefordert. Durch eine solche Sicherheitsprüfung bzw. Plausibilitätsprüfung, die naturgemäß etwas längere Zeit dauert, beispielsweise bis zu 1 min oder bis zu 3 min, kann eine zusätzliche Fehlerquelle einer Fehlpositionierung ausgeschlossen werden. An sich ist ein solches Verfahren ja aus dem eingangs genannten Stand der Technik bekannt, und hier wird es eben zur verbesserten Plausibilitätsprüfung eingesetzt.

### KURZBESCHREIBUNG DER ZEICHNUNGEN

Weitere Vorteile und Aspekte der Erfindung ergeben sich aus den Ansprüchen und aus der Beschreibung von Ausführungsbeispielen der Erfindung, die nachfolgend anhand der Figuren erläutert sind. Dabei zeigen:
- Fig. 1: eine Draufsicht auf ein Kochfeld gemäß einer ersten Ausgestaltung der Erfindung,
- Fig. 2: einen für das erfindungsgemäße Verfahren verwendeten Topf mit einem Aufsatzmodul auf einem Topfdeckel,
- Fig. 3: das Kochfeld aus Fig. 1 mit Angabe der Abstände der Mittelpunkte der vier Induktionsheizspulen zu einem Haupt-Konnektor,
- Fig. 4: das Kochfeld aus Fig. 3 mit einem auf die linke vordere Induktionsheizspule aufgesetzten Topf, sowie den Topf in einer zweiten Position über einer anderen Induktionsheizspule,
- Fig. 5: eine Abwandlung des Kochfelds aus Fig. 1 mit einer in der Mitte des Kochfelds befindlichen Start-Position,
- Fig. 6: das Kochfeld aus Fig. 5 mit einem mittig über der Start-Position aufgesetzten Topf,
- Fig. 7: das Kochfeld aus Fig. 6, bei dem der Topf nach seinem Erkennen auf die linke vordere Induktionsheizspule verschoben worden ist,
- Fig. 8: eine zweite Ausgestaltung eines Kochfelds ähnlich Fig. 1 mit vier Konnektoren nahe der Ecken des Kochfelds und einem Topf, der über der linken vorderen Induktionsheizspule aufgesetzt ist,
- Fig. 9: das Kochfeld aus Fig. 8 mit einem weiteren aufgesetzten Topf und einer möglichen gestrichelt dargestellten Topfposition,
- Fig. 10: eine dritte Ausgestaltung eines Kochfelds ähnlich Fig. 1 mit einem Haupt-Konnektor, der den Winkel eines Signals von der Gegen-Kommunikationseinrichtung eines Topfes zu dem Haupt-Konnektor ermitteln kann und
- Fig. 11: eine vierte Ausgestaltung eines Kochfelds mit einem Haupt-Konnektor, der eine Gegen-Kommunikationseinrichtung eines Topfes mit einer Antenne in einer gewissen Raumrichtung ansprechen kann.

### DETAILLIERTE BESCHREIBUNG DER AUSFÜHRUNGSBEISPIELE

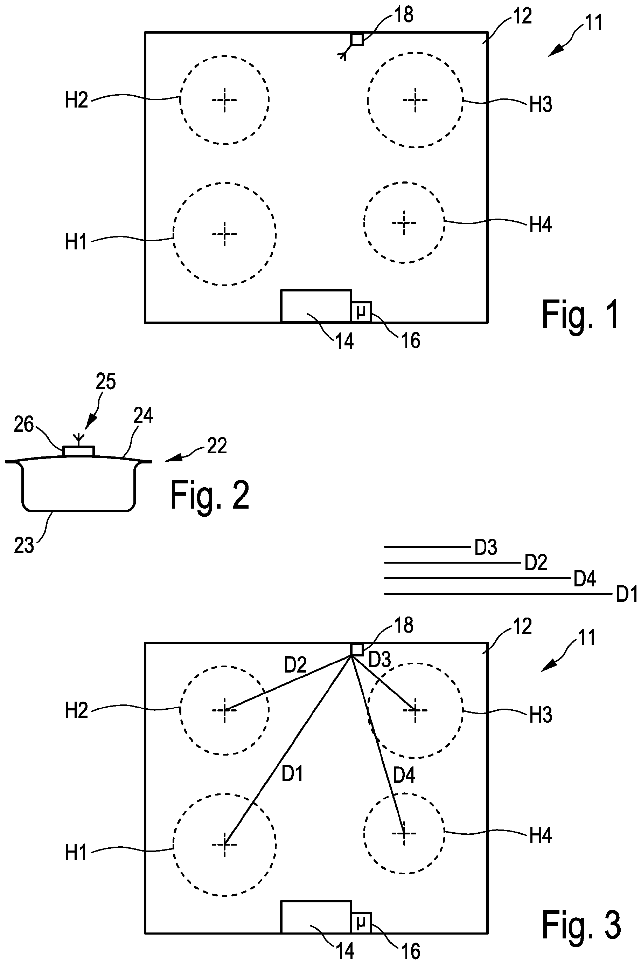

In der Fig. 1 ist ein Kochfeld 11 mit einer Kochfeldplatte 12 in einer ersten Ausgestaltung der Erfindung dargestellt, wie sie zuvor erläutert worden ist. Das Kochfeld 11 weist unter der Kochfeldplatte 12 vier Induktionsheizspulen H1, H2, H3 und H4 auf, die verteilt angeordnet sind. Sie können unterschiedlich groß sein, alternativ können sie auch gleich groß sein. Ihr Abstand zueinander ist relativ deutlich, vorteilhaft beträgt er mindestens 4 cm. Mit vier kreuzartigen Strichen sind auch jeweils die Mittelpunkte der Induktionsheizspulen H1 bis H4 dargestellt, die in der Praxis aber nicht auf der Kochfeldplatte 12 markiert sein müssen. Vorteilhaft kann aber eine Ringmarkierung entsprechend der Größe der jeweiligen Induktionsheizspule H1 bis H4 darauf vorgesehen sein, wie dies von Kochfeldern bekannt ist. Diese Induktionsheizspulen H1 bis H4 sind auch gleichzeitig, wie es bekannt ist, mit einer Funktion einer Topferkennung versehen, so dass sie die eingangs genannte Topferkennungseinrichtung bilden.

Im vorderen Bereich weist das Kochfeld 11 eine Bedieneinrichtung 14 auf, vorteilhaft mit Berührungsschaltern und einer Anzeige bzw. einem Anzeigedisplay. Mit der Bedieneinrichtung 14 ist eine Kochfeldsteuerung 16 verbunden, die einen Mikrocontroller aufweist. Diese Kochfeldsteuerung 16 bildet zusammen mit den Induktionsheizspulen H1 bis H4 die genannte Topferkennungseinrichtung.

Im hinteren Bereich des Kochfelds 11 ist ein Haupt-Konnektor 18 angeordnet, und zwar unter der Kochfeldplatte 12, vorteilhaft innerhalb eines darunter befindlichen üblichen Kochfeldgehäuses. Die Position des Haupt-Konnektors 18 ist gezielt gewählt, wie nachfolgend aus der Beschreibung der Fig. 3 noch deutlich wird. Dieser Haupt-Konnektor 18 ist die zuvor erläuterte Haupt-Kommunikationseinrichtung. Er weist einen Sender und einen Empfänger auf, die vorteilhaft mit einem drahtlosen bzw. Bluetooth-Kommunikationsprotokoll oder, noch besser, mit einem BLE-Kommunikationsprotokoll arbeiten können und somit dem BLE-Standard senden und empfangen. Insbesondere ist der Haupt-Konnektor 18 zur Messung eines Abstands ausgebildet, was nachfolgend noch näher erläutert wird.

In der Fig. 2 ist ein Topf 22 dargestellt mit einem Topfboden 23, dessen Fläche seine eingangs genannte Aufstandfläche bildet. Sie ist vorteilhaft rund. Der Topf 22 weist einen Deckel 24 auf, der zentrisch eine Gegen-Kommunikationseinrichtung 25 aufweist, die in einem Aufsatzmodul 26 integriert ist. Die symbolische Antenne der Gegen-Kommunikationseinrichtung 25 ist in der Praxis nicht vorhanden.

Der Topf 22 mit dem Aufsatzmodul 26 ist ein sogenannter smarter bzw. intelligenter Topf, wie er beispielsweise aus der vorgenannten EP 3 001 771 A1 bekannt ist. Das Aufsatzmodul 26 weist nämlich nicht nur die Gegen-Kommunikationseinrichtung 25 auf, sondern noch eine Energieversorgung, eine eigene kleine Steuerung bzw. einen eigenen Mikrocontroller und beispielsweise einen Temperatursensor und/oder einen Drucksensor. Beide Sensoren überwachen das Innere des Topfes 22, wobei der Temperatursensor dazu ausgebildet ist, die Temperatur eines im Topf 22 befindlichen Garguts zu erfassen. Somit können Kochvorgänge mit Automatikprogrammen gesteuert werden, wie dies aus dem Stand der Technik bekannt ist. Diese Automatikprogramme laufen in der Kochfeldsteuerung 16 ab und verwenden die Daten der Sensoren des Aufsatzmoduls 26, insbesondere Temperaturdaten eines Temperatursensors. Je nach gewünschter Temperatur kann die Kochfeldsteuerung 16 dann die Induktionsheizspule H1 bis H4, über der der Topf 22 aufgestellt ist, entsprechend ansteuern. Auch die Gegen-Kommunikationseinrichtung 25 arbeitet mit demselben Kommunikationsprotokoll wie der Haupt-Konnektor 18, vorteilhaft also BLE.

In der Fig. 3 sind oberhalb des Kochfelds 11 zur Verdeutlichung noch einmal die Abstände D1 bis D4 zwischen den durch ein Kreuz gestrichelt markierten Mittelpunkten der Induktionsheizspulen H1 bis H4 und dem Haupt-Konnektor 18 dargestellt. In der Projektion von oben sind dies gerade Linien, wobei die Abstufung der Abstände D1 bis D4 zueinander relativ deutlich ist und sie somit deutlich unterscheidbar macht. Bei einer üblichen Breite des Kochfelds 11 von 60 cm beträgt der Abstand D1 etwa 40 cm, und die Abstufung zwischen den einzelnen Abständen dann etwa 8 cm, so dass der Abstand D3 noch etwa 16 cm beträgt.

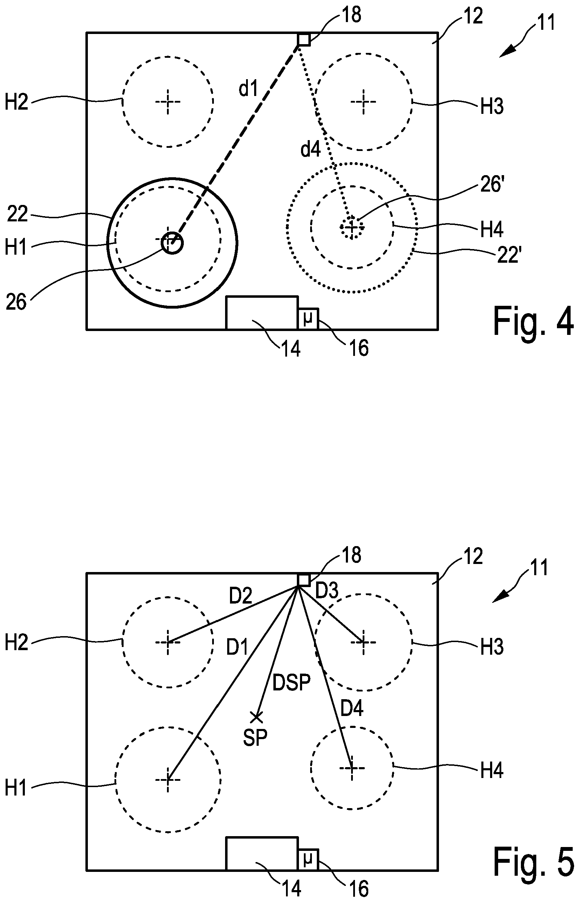

In der Fig. 4 ist dargestellt, wie der Topf 22 über der Induktionsheizspule H1 auf die Kochfeldplatte 12 gestellt ist. Aus dem Vergleich des Aufsatzmoduls 26 zu dem Mittelpunkt der Induktionsheizspule H1 ist zu ersehen, dass der Topf 22 nahezu zentrisch darüber steht und nur leicht nach rechts unten verschoben ist, beispielsweise in der Praxis um 1 cm. Dann erfolgt eine Abstandsmessung vom Haupt-Konnektor 18 zu dem Aufsatzmodul 26, das sozusagen stellvertretend für den Topf 22 steht. Diese Abstandsmessung erfolgt wie vorbeschrieben mittels BLE, insbesondere als Laufzeitmessung, und sie ergibt den Abstand d1. Dieser Abstand d1 wird nun mit den in der Kochfeldsteuerung 16 abgespeicherten Abständen D1 bis D4 der Induktionsheizspulen H1 bis H4 zum Haupt-Konnektor 18 verglichen. In der Praxis ist hier zu beachten, dass die Abstände D nahezu horizontal verlaufen, während die Abstände d zwischen Haupt-Konnektor 18 und Aufsatzmodul 26 sozusagen schräg nach oben verlaufen. Die Aufsatzmodule 26 oben auf den Töpfen 22 befinden sich in der Regel zwischen 10 cm und 20 cm über der Kochfeldplatte 12. Hier kann ein durchschnittlicher Wert von etwa 15 cm angenommen werden, der dann über die bekannten Winkelfunktionen mit dem gemessenen Abstand d1 verrechnet wird bzw. diesen korrigiert. Als Ergebnis stellt die mit dem Haupt-Konnektor 18 verbundene Kochfeldsteuerung 16 fest, dass nicht nur die Induktionsheizspule H1 das Aufstellen irgendeines beliebigen Topfes über sich erkannt hat, sondern dass dies eben ein spezieller Topf ist, nämlich der Topf 22. Der korrigierte Wert für den Abstand d1 wird relativ nahe bei dem abgespeicherten Abstand D1 liegen, so dass verifiziert ist, dass sich der Topf 22 oberhalb der Induktionsheizspule H1 befindet. Das Aufsatzmodul 26 schickt nun eine individuelle Kennung, die den damit versehenen Topf kennzeichnet, an den Haupt-Konnektor 18, die dieser mit seinem Empfänger empfängt und an die Kochfeldsteuerung 16 weitergibt. Diese verknüpft nun den Topf 22 mit seiner individuellen Kennung mit seiner Position über der linken vorderen Induktionsheizspule H1. So können Temperatursignale oder sonstige Sensorsignale vom Aufsatzmodul 26 vom Haupt-Konnektor 18 empfangen werden und von der Kochfeldsteuerung 16 in einem vorgenannten Automatikprogramm an der linken vorderen Induktionsheizspule H1 entsprechend berücksichtigt werden.

Vorteilhaft kann hier vorgesehen sein, dass die Induktionsheizspule H1 das Aufsetzen eines Topfes über sich erkennt. Dann gibt sie nicht nur diese Information an die Kochfeldsteuerung 16 weiter, sondern die Kochfeldsteuerung 16 initiiert mittels des Haupt-Konnektors 18 dann die Messung des Abstands d1. Zuvor kann sie über ein anderes Signal überhaupt abfragen, ob der über der Induktionsheizspule H1 aufgesetzte Topf einer mit einem Aufsatzmodul 26 ist bzw. ob sich ein neues Aufsatzmodul 26 mit dem Haupt-Konnektor 18 verbunden hat.

Der Topf 22 könnte nun auch verschoben werden, beispielsweise, wie punktiert dargestellt ist, nach rechts über die rechte vordere Induktionsheizspule H4. Die Induktionsheizspule 1 erkennt also keinen Topf mehr über sich, während gleichzeitig die Induktionsheizspule H4 einen neuen Topf über sich erkennt. Dies könnte natürlich auch alternativ bedeuten, dass der Topf 22 ganz vom Kochfeld 11 entfernt worden ist, und ein anderer Topf über die Induktionsheizspule H4 aufgestellt worden ist. Um dies festzustellen, versucht der Haupt-Konnektor 18, eine Kennung eines Aufsatzmoduls zu empfangen. Geht dies, wie hier im Fall der Fig. 4 mit einem Signal vom Aufsatzmodul 26` bzw. einer Kennung, so muss nun noch sichergestellt werden, dass diese empfangene Kennung auch tatsächlich von einem Topf über der rechten vorderen Induktionsheizspule H4 stammt, an dem sich das entsprechende Aufsatzmodul 26 befindet. Dies erfolgt wiederum über die Messung des Abstands, und der gemessene Abstand D4 zwischen Haupt-Konnektor 18 und Aufsatzmodul 26 entspricht mit der vorgenannten durchschnittlichen Höhenkorrektur dann relativ gut dem Abstand D4. Das Kochfeld 11 bzw. die Kochfeldsteuerung 16 weiß also sicher, dass der Topf 22 mit der individuellen Kennung, der vorher über der linken vorderen Induktionsheizspule H1 stand, nun über der rechten vorderen Induktionsheizspule H4 steht.

Aus den Fig. 3 und 4 ist gleichzeitig ein Problem bei dieser Ausführung der Erfindung erkennbar. Der Abstand zwischen dem Haupt-Konnektor 18 und dem Aufsatzmodul 26` verläuft sozusagen oberhalb der rechten hinteren Induktionsheizspule H3. Ist dort nun ein Topf aufgestellt, egal ob mit oder ohne Aufsatzmodul, so ist die direkte und kürzeste Funkverbindung nicht mehr störungsfrei gegeben, dieser Topf könnte die Abstandsmessung stören bzw. verfälschen. Es könnte somit sein, dass die Abstandsmessung falsche Ergebnisse hervorbringt. Entweder wird sie nur mit einem einzigen Topf auf dem Kochfeld durchgeführt oder mit Topfpositionen, die in Linie zum Haupt-Konnektor 18 hin nicht durch entsprechende auf die Induktionsheizspule aufgestellte Töpfe blockiert werden können. Dies ist aber voraussichtlich nicht immer möglich. Eine Anordnung des Haupt-Konnektors 18 im zentralen Bereich des Kochfelds 11 zwischen den Induktionsheizspulen H1 bis H4 wird aber als problematisch angesehen, da nicht sicher ausreichend unterschiedliche Abstände D zu den Mittelpunkten der Induktionsheizspulen H1 bis H4 bzw. zu zentrisch darüber aufgesetzten Töpfen mit Aufsatzmodulen erreicht werden können bei der eingangs genannten Genauigkeit einer Abstandsmessung mittels Bluetooth oder mittels BLE. Des Weiteren müssten die Funksignale mehrfach durch Deckel und/oder Topfwandung hindurchgehen, was ein erhebliches Risiko und eine Verfälschung der Messergebnisse bedeutet.

Des Weiteren ist in einer Variante der ersten Ausgestaltung der Erfindung, die eingangs auch erläutert worden ist, gemäß Fig. 5 eine Start-Position SP auf der Kochfeldplatte 12 definiert. Im vorliegenden Fall ist sie genau mittig im Kochfeld 11 definiert, sie sollte für die Bedienperson auch extra markiert sein, möglicherweise mit einer schaltbaren Beleuchtung. Die Abstände D1 bis D4 sind wiederum eingezeichnet.

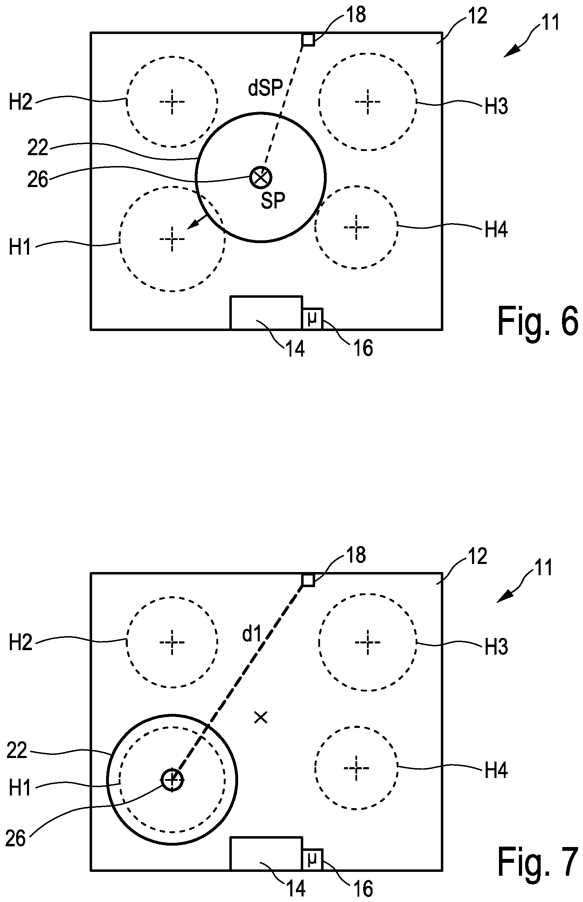

Gemäß Fig. 6 wird nun ein neu aufzustellender Topf 22 mittig über die Start-Position gestellt bzw. so auf die Kochfeldplatte 12 aufgestellt, dass das Aufsatzmodul 26 möglichst mittig bzw. vertikal über der Start-Position SP ist. Entweder kann nun der Haupt-Konnektor 18 die plötzliche Nähe eines Topfes mit einem Aufsatzmodul erkennen, möglicherweise kann dies von einer Bedienperson auch nach dem Aufstellen extra eingeschaltet worden sein. Dies alleine ist aber nicht unbedingt sicher genug, weil ja auch ein Topf mit einem Aufsatzmodul neben dem Kochfeld 11 bzw. der Kochfeldplatte 12, aber dennoch recht nahe und mit einem Abstand von weniger als D1 zum Haupt-Konnektor 18 platziert sein könnte, beispielsweise rechts daneben. Es ist auch erkennbar, dass die Induktionsheizspulen H1 bis H4 hier nicht so gut als Topferkennungseinrichtung funktionieren können, da die Überlappung zu ungenau ist. Deswegen ist hier vorteilhaft unterhalb der Start-Position SP ein eigener spezieller Topferkennungssensor vorgesehen, beispielsweise induktiv ausgebildet. Dieser erkennt das Aufstellen eines Topfes 22 über sich, wie zuvor beschrieben, und startet nun einerseits die Abstandsmessung sowie andererseits die Abfrage einer Kennung des Topfes bzw. des zugehörigen Aufsatzmoduls.

Der Haupt-Konnektor 18 misst also einen Abstand dSP zu dem Aufsatzmodul 26, und zwar korrigiert wie zuvor beschrieben. Passt dieser Abstand einigermaßen zu dem bekannten Abstand DSP zwischen der Start-Position SP und dem Haupt-Konnektor 18, so wird zusammen mit der Information, dass ein Topf über der Start-Position SP erkannt worden ist, als ausreichend sicher angenommen, um zu bestimmen, dass der Topf 22 mit dem Aufsatzmodul 26 mit der bestimmten individuellen Kennung, also ein nun bekannter Topf 22, an der Start-Position SP steht.

Nun wird gemäß der Fig. 7 der Topf 22 von der Start-Position SP an seine Heizposition oberhalb der linken vorderen Induktionsheizspule H1 bewegt. Zum einen erkennt dies die Induktionsheizspule H1 selbst über ihre Topferkennungsfunktion zusammen mit der Kochfeldsteuerung 16. Des Weiteren erfolgt zur Sicherheit nochmals eine Abstandsmessung vom Haupt-Konnektor 18 zum Aufsatzmodul 26. Der dabei gemessene Abstand d1 passt einigermaßen zu dem bekannten Abstand D1 bzw. die Differenz ist sehr gering, so dass die Kochfeldsteuerung 16 mit Sicherheit davon ausgehen kann, dass der Topf 22 mit der eigenen Kennung nun auf der linken vorderen Induktionsheizspule H1 steht. Dort kann dann ein Automatikprogramm von der Kochfeldsteuerung 16 durchgeführt werden.

Anhand der Beschreibung zusammen mit den Fig. 5 bis 7 ist leicht vorstellbar, dass so auch sehr einfach weitere Töpfe mit einem Aufsatzmodul, wie hier beschrieben, auf dem Kochfeld 11 verwendet werden können. So kann nämlich ein nächster Topf wieder oberhalb der Start-Position SP aufgesetzt werden und mit Sicherheit erkannt werden sowie danach über eine andere Induktionsheizspule H2 bis H4 zur Beheizung geschoben bzw. positioniert werden.

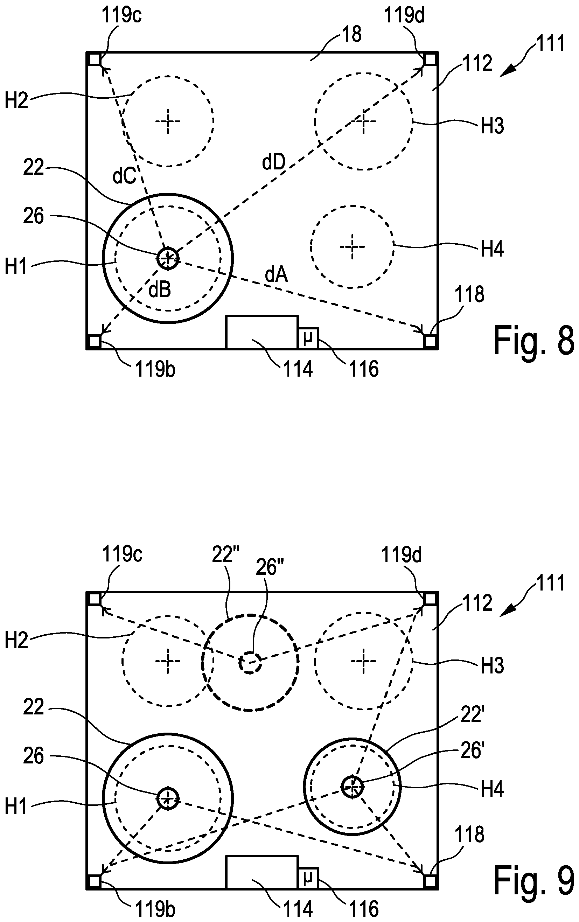

In den Fig. 8 und 9 ist eine zweite zuvor erläuterte Ausgestaltung der Erfindung dargestellt. Das hier dargestellte Kochfeld 111 mit einer Kochfeldplatte 112, einer Bedieneinrichtung 114 und einer Kochfeldsteuerung 116 samt vier Induktionsheizspulen H1 bis H4 weist vorne rechts im Eck einen Haupt-Konnektor 118 auf. Dieser kann genauso ausgebildet sein wie der Haupt-Konnektor 18 der Fig. 1 bis 7. In den anderen Dreiecken sind Zusatz-Konnektoren 119 angeordnet. Sie können vom Aufbau bzw. der Hardware her identisch sein zum Haupt-Konnektor 118, aber mit anderen Funktionen versehen sein bzw. angesteuert werden. Alternativ können sie auch einfacher ausgebildet sein, nämlich nur zur Abstandsmessung und nicht auch zur Kommunikation bzw. zum Empfang von einer individuellen Kennung eines Topfes bzw. seines Aufsatzmoduls.

Ein Topf 22 entsprechend der vorherigen Figuren mit einem Aufsatzmodul 26 wird nun von einer Bedienperson über der linken vorderen Induktionsheizspule H1 auf die Kochfeldplatte 12 aufgesetzt, und zwar einigermaßen zentrisch. Die Induktionsheizspule H1 als Topferkennung erkennt dies zusammen mit der Kochfeldsteuerung 116, wie zuvor beschrieben, und startet das erfindungsgemäße Verfahren. Der Haupt-Konnektor 118 rechts vorne sendet nun ein Signal aus, um zu überprüfen, ob ein Topf mit einem solchen Aufsatzmodul in der Nähe identifiziert werden kann. Dies ist natürlich bei dem Topf 22 mit dem Aufsatzmodul 26 der Fall. Nun muss aber noch überprüft werden, ob über der Induktionsheizspule H1 tatsächlich der Topf 22 mit dem Aufsatzmodul 26 und der entsprechenden individuellen Kennung aufgesetzt ist. Dazu wird jeweils eine Abstandsmessung durchgeführt nicht nur zwischen dem Haupt-Konnektor 118 und dem Aufsatzmodul 26, sondern auch zu den drei Zusatz-Konnektoren 119b bis 119d. Dies ergibt jeweils die Abstände dA, dB, dC und dD. Es könnte nun zwar mehrfach überprüft werden, ob diese gemessenen Abstände mit bekannten Abständen zu dem Mittelpunkt der Induktionsheizspule H 1 passen. Befinden sich aber mehrere Töpfe auf der Kochfeldplatte 112, insbesondere auch über den Induktionsheizspulen H3 und H2, so ist offensichtlich, dass sie eine Abstandsmessung durch Reflexion stark stören würden. Deswegen wird hier sinnvollerweise nur eine Abstandsmessung mit dem Haupt-Konnektor 118 und dem Zusatz-Konnektor 119b vorgenommen. In einer ersten Variante kann dies mit den bekannten Abständen des Mittelpunkts der Induktionsheizspule H1 zu diesen beiden Konnektoren verglichen werden. Das Ergebnis hier ist sehr eindeutig, dass nämlich der Topf 22 mit dem Aufsatzmodul 26 oberhalb der Induktionsheizspule H1 aufgesetzt ist, und, wie zuvor erläutert, kann nun die Kochfeldsteuerung 116 ein Automatikprogramm damit durchführen.

Um aber das Verfahren auch bei einem Kochfeld durchführen zu können, das nicht nur einzelne und voneinander getrennte und beabstandete Induktionsheizspulen aufweist, sondern ein sogenanntes Flächenkochfeld ist mit einer Vielzahl von Heizeinrichtungen, die sehr eng beieinander den wesentlichen Bereich Kochfeldplatte 112 bedecken, kann es wünschenswert sein, möglichst genau die Position des Aufsatzmoduls 26 zu bestimmen. Eine Information über die Größe des zugehörigen Topfes 22 kann in dessen Kennung enthalten sein.

Zu diesem Zweck werden die Abstände dA und dB vom Aufsatzmodul 26 zum Haupt-Konnektor 118 und zum Zusatz-Konnektor 119b gemessen. Aus ihnen kann nun mit Trigonometrie und aufgrund des bekannten Abstands der beiden Konnektoren 118 und 119b zueinander der genaue Aufstellort des Topfes 22 berechnet werden. Aufgrund der bekannten Größe des Topfes 22 können dann entsprechende und entsprechend viele von den mehreren Heizeinrichtungen des Kochfelds 11 von der Kochfeldsteuerung 116 aktiviert werden, um den Topf 22 gewünscht zu beheizen.

In der Fig. 9 ist dargestellt, wie nun über der rechten vorderen Induktionsheizspule H4 ein weiterer Topf 22' mit Aufsatzmodul 26` aufgestellt worden ist. Dieses Aufstellen ist erkannt worden, des Weiteren hat der Haupt-Konnektor 118 erkannt, dass ein weiterer Topf mit einem Aufsatzmodul zusätzlich zu dem bereits vorhandenen und erkannten Topf 22 aufgestellt wurde. Da zu vermuten ist, dass dies über der Induktionsheizspule H4 oder zumindest im rechten vorderen Bereich ist, und die Abstandsmessung vom Zusatz-Konnektor 119b zum Aufsatzmodul 26` durch den Topf 22 gestört sein könnte, nimmt die Kochfeldsteuerung 116 stattdessen den rechten hinteren Zusatz-Konnektor 119d zur Abstandsmessung. Sie weiß nämlich, dass im rechten hinteren Bereich bzw. über der Induktionsheizspule H3 kein Topf aufgesetzt ist. Nun kann auch wieder, wie zuvor beschrieben, die Positionierung des Topfes 22' mit Aufsatzmodul 26` über der rechten vorderen Induktionsheizspule H4 verifiziert werden oder aber der genaue Aufsatzort berechnet werden.

Gestrichelt dargestellt ist hinten ein Topf 22" mit einem Aufsatzmodul 26", der ähnlich wie bei Fig. 6 bezüglich des Aufstellens auf die Kochfeldplatte 112 nicht genau erkannt werden kann. Der Haupt-Konnektor 118 kann hier aber auch wiederum das Vorhandensein eines Topfes mit Aufsatzmodul insgesamt erkennen, möglicherweise kann dies auch eine Topferkennungseinrichtung erkennen. Da bekanntermaßen im vorderen Bereich des Kochfelds 111 bereits die beiden Töpfe 22 und 22' stehen, wird der Topf 22" im hinteren Bereich vermutet. Somit ermitteln die beiden hinteren Zusatz-Konnektoren 119c und 119d ihre jeweiligen Abstände dC und dD zum Aufsatzmodul 26". Daraus kann dessen genaue Position berechnet werden, und die entsprechende individuelle Kennung wird von dem Haupt-Konnektor 118 empfangen und an die Kochfeldsteuerung 116 weitergegeben. Somit kann auch der Topf 22", wie zuvor beschrieben, beheizt werden, vorausgesetzt, er ist ausreichend über einer der Induktionsheizspulen oder einer sonstigen Heizeinrichtung des Kochfelds 111 positioniert.

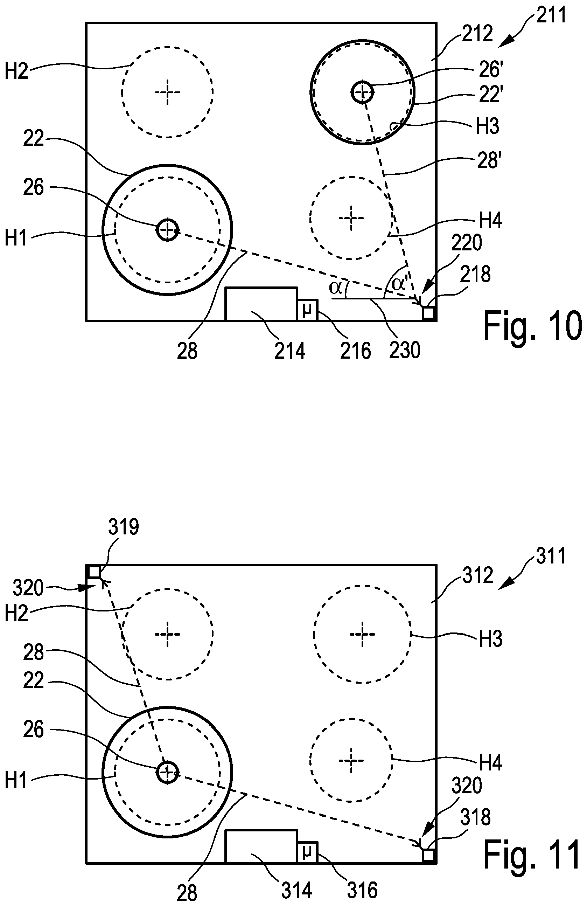

Die Fig. 10 zeigt ein Kochfeld 211 mit einer Kochfeldplatte 212, vier Induktionsheizspulen H1 bis H4, einer Bedieneinrichtung 214 und einer Kochfeldsteuerung 216. in der rechten vorderen Ecke ist ein Haupt-Konnektor 218 angeordnet, der eine Antenne 220 aufweist, die sozusagen in Richtung auf die Kochfeldplatte 212 bzw. die Induktionsheizspulen H1 bis H4 gerichtet ist. Die Antenne 220 ist dabei derart ausgebildet, dass sie, wie eingangs erläutert, einen Winkel zu einem Signal bzw. einer gestrichelt dargestellten Signallinie 28 von einer Gegen-Kommunikationseinrichtung in einem Aufsatzmodul 26 des Topfes 22 über der Induktionsheizspule H1 zu dem Haupt-Konnektor 218 ermitteln kann. Dies ist die sogenannte Angle of arrival Technologie. Damit kann der Winkel α zwischen der Signallinie 28 und einer Grundlinie 230, die beispielhaft parallel zur Vorderkante des Kochfelds 211 verläuft, bestimmt werden. So kann bei der festen Anordnung des Haupt-Konnektors 218 bzw. möglicherweise auch einer Zusatz-Kommunikationseinrichtung, falls diese vorhanden wäre, der Winkel α bestimmt werden. Dann kann zusammen mit der vorgenannten Abstandsmessung geometrisch berechnet werden, wo genau die Gegen-Kommunikationseinrichtung und somit der zugehörige Topf 22 auf die Kochfeldplatte 212 aufgestellt ist.

Über der Induktionsheizspule H3 ist ein weiterer Topf 22' aufgestellt mit einer Gegen-Kommunikationseinrichtung in einem Aufsatzmodul 26', zu dem die Antenne 220 einen Winkel α' aufweist. Mittels der entsprechenden vorgenannten Abstandsmessung kann dann auch dessen Position auf der Kochfeldplatte 212 bestimmt werden.

Die Fig. 11 zeigt ein Kochfeld 311 mit einer Kochfeldplatte 312, vier Induktionsheizspulen H1 bis H4, einer Bedieneinrichtung 314 und einer Kochfeldsteuerung 316. in der rechten vorderen Ecke ist ein Haupt-Konnektor 318 angeordnet, der eine Antenne 320 aufweist, die sozusagen in Richtung auf die Kochfeldplatte 312 bzw. die Induktionsheizspulen H1 bis H4 gerichtet ist. Die Antenne 320 ist dabei derart ausgebildet, dass sie, wie eingangs erläutert, alleine oder mittels mehrerer weiterer Antennen die Gegen-Kommunikationseinrichtung des Topfes 22 in einer vorgegebenen Raumrichtung in einem vorgegeben Zeitraum in einer variablen Signalstärke anzusprechen. Die gestrichelt dargestellte Signallinie 28 von einer Gegen-Kommunikationseinrichtung in einem Aufsatzmodul 26 des Topfes 22 über der Induktionsheizspule H1 zu dem Haupt-Konnektor 318 entspricht einer dieses Raumrichtungen. So weiß der Haupt-Konnektor 318 bzw. kann bestimmen, in welcher Richtung bzw. Raumrichtung die Gegen-Kommunikationseinrichtung ist. Zwischen mehreren Gegen-Kommunikationseinrichtungen kann eine Unterscheidung mittels der variablen Signalstärke erfolgen, so dass auch die Richtung bzw. Raumrichtung dieser mehreren Gegen-Kommunikationseinrichtungen jeweils bestimmt werden kann. Mittels der entsprechenden vorgenannten Abstandsmessung kann dann auch deren jeweilige Position auf der Kochfeldplatte 312 bestimmt werden.

Links oben weist das Kochfeld 311 einen Zusatz-Konnektor 319 mit einer Antenne 320 auf, die entsprechend der Antenne 320 des Haupt-Konnektors 318 ausgebildet ist, vorteilhaft genau gleich. Der Zusatz-Konnektor 319 mit seiner Antenne 320 spricht ebenso die Gegen-Kommunikationseinrichtung des Topfes 22 in einer vorgegebenen Raumrichtung in einem vorgegeben Zeitraum in einer variablen Signalstärke an. So kann die gleiche Bestimmung deren jeweiliger Position auf der Kochfeldplatte 312 erfolgen. Damit kann das Ergebnis der Positionsbestimmung des Haupt-Konnektors 318 für den Topf 22 überprüft oder präzisiert werden.

## Patentansprüche

1. Verfahren zur Bestimmung einer Topfposition eines Topfes (22) auf einem Kochfeld (11, 111, 211, 311), wobei das Kochfeld (11, 111, 211, 311) aufweist:
- eine Kochfeldplatte (12, 112, 212, 312) zum Aufstellen des Topfes (22),
- mehrere Heizeinrichtungen (H), die nebeneinander unter der Kochfeldplatte (12, 112, 212, 312) angeordnet sind,
- eine Kochfeldsteuerung (16, 116, 216, 316),
- eine Haupt-Kommunikationseinrichtung (18, 118, 218, 318), die:
+ einen Sender und einen Empfänger aufweist, die zur Kommunikation mit einem Topf (22) mit einer Gegen-Kommunikationseinrichtung (25) ausgebildet ist,
+ zur Messung eines Abstands (d) zwischen sich und der Gegen-Kommunikationseinrichtung (25) des Topfes (22) ausgebildet ist,
+ zur Verwendung eines drahtlosen Kommunikationsprotokolls ausgebildet ist,
+ dazu ausgebildet ist, eine individuelle Kennung der Gegen-Kommunikationseinrichtung (25) zu empfangen und diese abzuspeichern in der Kochfeldsteuerung (16, 116, 216, 316),
+ zu der Kochfeldsteuerung (16, 116, 216, 316) gehört und/oder von dieser gesteuert wird,
mit den Schritten:
- das Kochfeld (11, 111, 211, 311) und die Haupt-Kommunikationseinrichtung (18, 118, 218, 318) sind eingeschaltet und ein Topf (22) mit einer Gegen-Kommunikationseinrichtung (25) wird auf die Kochfeldplatte (12, 112, 212, 312) aufgestellt, insbesondere in beliebiger Position,
- das Aufsetzen bzw. Vorhandensein des Topfes (22) auf der Kochfeldplatte (12, 112, 212, 312) wird erkannt, vorzugsweise über eine Topferkennungseinrichtung an der Heizeinrichtung (H) oder mittels der Heizeinrichtung (H),
- nach dem Erkennen des Vorhandenseins oder des Aufsetzens des Topfes (22) auf der Kochfeldplatte (12, 112, 212, 312) wird der Abstand (d) zwischen der Haupt-Kommunikationseinrichtung (18, 118, 218, 318) und der Gegen-Kommunikationseinrichtung (25) des Topfes (22) gemessen,
- mit dem gemessenen Abstand (d) zwischen Haupt-Kommunikationseinrichtung (18, 118, 218, 318) und Gegen-Kommunikationseinrichtung (25) erfolgt eine Bestimmung der Topfposition des Topfes (22) auf dem Kochfeld (11, 111, 211, 311),
- die bestimmte Topfposition wird mit der individuellen Kennung der Gegen-Kommunikationseinrichtung (25) gemeinsam in der Kochfeldsteuerung (16, 116, 216, 316) abgespeichert.

2. Verfahren nach Anspruch 1, **dadurch gekennzeichnet, dass** die Gegen-Kommunikationseinrichtung (25) bei dem Topf (22) in der Projektionsrichtung von oben einen Abstand von weniger als 2 cm, insbesondere weniger als 1 cm, zu einem Flächenmittelpunkt einer Aufstandfläche des Topfes (22) auf der Kochfeldplatte (12, 112, 212, 312) aufweist.

3. Verfahren nach Anspruch 1 oder 2, **dadurch gekennzeichnet, dass** der Abstand (d) zwischen Haupt-Kommunikationseinrichtung (18, 118, 218, 318) und Gegen-Kommunikationseinrichtung (25) mittels Bluetooth oder mittels Ultra Wide Band-Funk gemessen wird, vorzugsweise mittels BLE, wobei insbesondere hierfür eine Laufzeitmessung eines Signals von der Haupt-Kommunikationseinrichtung (18, 118, 218, 318) zu der Gegen-Kommunikationseinrichtung (25) und von dieser zurück zur Haupt-Kommunikationseinrichtung (18, 118, 218, 318) durchgeführt wird.

4. Verfahren nach einem der vorhergehenden Ansprüche, **dadurch gekennzeichnet, dass** das Erkennen eines Vorhandenseins oder Aufsetzens des Topfes (22) mit der Gegen-Kommunikationseinrichtung (25) auf der Kochfeldplatte (12, 112, 212, 312) von Topferkennungssensoren und der Kochfeldplatte (12, 112, 212, 312) und/oder von in den Heizeinrichtungen (H) integrierten Topferkennungsmitteln erkannt wird, wobei insbesondere die Heizeinrichtungen (H) Induktionsheizspulen sind, die zur Erkennung eines darüber auf der Kochfeldplatte (12, 112, 212, 312) positionierten Topfes (22) ausgebildet sind, wobei vorzugsweise das Erkennen eines Vorhandenseins oder Aufsetzens des Topfes (22) das Verfahren zur Bestimmung der Topfposition auslöst.

5. Verfahren nach einem der vorhergehenden Ansprüche, **dadurch gekennzeichnet, dass**
- die Heizeinrichtungen (H) zueinander einen Abstand von mindestens 4 cm aufweisen, wobei vorzugsweise die Heizeinrichtungen (H) dazu ausgebildet sind, einen darüber aufgestellten Topf (22) als einzige Heizeinrichtung (H) zu beheizen,
- der Abstand (D) jedes Mittelpunkts jeder Heizeinrichtung (H) zu der Haupt-Kommunikationseinrichtung (18, 118, 218, 318) bekannt ist und bei jeder Heizeinrichtung (H) unterschiedlich ist, vorzugsweise um mindestens 2 cm unterschiedlich,
- der gemessene Abstand (d) zwischen Haupt-Kommunikationseinrichtung (18, 118, 218, 318) und Gegen-Kommunikationseinrichtung (25) mit den bekannten Abständen (D) der Mittelpunkte der Heizeinrichtungen (H) zu der Haupt-Kommunikationseinrichtung (18, 118, 218, 318) verglichen wird,
- der Topf (22) als auf derjenigen Heizeinrichtung (H) positioniert angesehen wird, bei der der Abstand (D) ihres Mittelpunkts zur Haupt-Kommunikationseinrichtung (18, 118, 218, 318) die geringste Differenz aufweist zu dem Abstand (d) zwischen Haupt-Kommunikationseinrichtung (18, 118, 218, 318) und Gegen-Kommunikationseinrichtung (25),
wobei insbesondere das Kochfeld (11, 111, 211, 311) vier, sechs oder acht Heizeinrichtungen (H) aufweist, die vorzugsweise gleichartig und/oder gleich groß ausgebildet sind.

6. Verfahren nach Anspruch 5, **dadurch gekennzeichnet, dass** es nur dann ausgeführt wird, wenn nur ein einziger Topf (22) mit einer Gegen-Kommunikationseinrichtung (25) auf dem Kochfeld (11, 111, 211, 311) positioniert ist, vorzugsweise wenn überhaupt nur ein einziger Topf (22) auf dem Kochfeld (11, 111, 211, 311) positioniert ist, wobei insbesondere mittels der Topferkennungseinrichtung erkannt wird, ob nur ein einziger Topf (22) auf dem Kochfeld (11, 111, 211, 311) positioniert ist, und nur in diesem Fall das Verfahren zur Bestimmung der Topfposition durchgeführt wird.

7. Verfahren nach Anspruch 5 oder 6, **dadurch gekennzeichnet, dass** auf der Kochfeldplatte (12, 112, 212, 312) eine bestimmte Start-Position (SP) für einen aufzusetzenden Topf (22) mit Gegen-Kommunikationseinrichtung (25) definiert ist, wobei vorzugsweise zur Bestätigung eines korrekten Aufsetzens des Topfes (22) auf die Start-Position (SP) ein Vergleich eines bekannten Abstandes (DSP) der Start-Position (SP) zu der Haupt-Kommunikationseinrichtung (18, 118, 218, 318) mit dem Ergebnis der Abstandsmessung zwischen Gegen-Kommunikationseinrichtung (25) und Haupt-Kommunikationseinrichtung (18, 118, 218, 318) erfolgt,
wobei dann die folgenden Schritte durchgeführt werden:
- der Topf (22) mit der Gegen-Kommunikationseinrichtung (25) wird an eine von einer Bedienperson gewünschte neue Topf-Position auf der Kochfeldplatte (12, 112, 212, 312) verschoben,
- die Topferkennungseinrichtung erkennt die neue Topfposition, an die der Topf (22) mit der Gegen-Kommunikationseinrichtung (25) verschoben worden ist, wobei insbesondere eine Plausibilitätsprüfung aufgrund eines bekannten Abstandes (D) der zu der neuen Topfposition gehörigen Heizeinrichtung (H) zu der Haupt-Kommunikationseinrichtung (18, 118, 218, 318) mit einem Abstand (d) der Gegen-Kommunikationseinrichtung (25) zu der Haupt-Kommunikationseinrichtung (18, 118, 218, 318) durchgeführt wird.

8. Verfahren nach einem der Ansprüche 1 bis 4, **dadurch gekennzeichnet, dass**
- mehrere Zusatz-Kommunikationseinrichtungen (319) im Kochfeld (311) unter der Kochfeldplatte (312) angeordnet sind, wobei diese Zusatz-Kommunikationseinrichtungen (319) zur Abstandsmessung auf dieselbe Art und Weise wie die Haupt-Kommunikationseinrichtung (318) ausgebildet sind,
- der Abstand (d) der Gegen-Kommunikationseinrichtung (25) zur Haupt-Kommunikationseinrichtung (318) und zusätzlich zu mindestens einer Zusatz-Kommunikationseinrichtung (319), insbesondere zusätzlich zu mehreren oder sämtlichen Zusatz-Kommunikationseinrichtungen (319) des Kochfeldes (311), bestimmt wird und daraus bei bekannter Position der Zusatz-Kommunikationseinrichtungen (319) im Kochfeld (311) die Topfposition auf der Kochfeldplatte (312) berechnet wird,
wobei vorzugsweise insgesamt mindestens zwei, insbesondere mindestens drei, Zusatz-Kommunikationseinrichtungen (319) in dem Kochfeld (311) angeordnet sind, aus deren Abstandsmessungen zu der Gegen-Kommunikationseinrichtung (25) des Topfes (22) die Topfposition bestimmt wird, wobei vorzugsweise die Topfposition bestimmt wird mittels Triangulation bzw Trigonometrie.

9. Verfahren nach Anspruch 8, **dadurch gekennzeichnet, dass** die Haupt-Kommunikationseinrichtung (318), vorzugsweise auch mindestens eine Zusatz-Kommunikationseinrichtung (319), dazu ausgebildet ist, eine Richtung bzw. einen Winkel (α, α') eines Signals von der Gegen-Kommunikationseinrichtung (25) des Topfes (22) zu der Haupt-Kommunikationseinrichtung (318) zu ermitteln.

10. Verfahren nach Anspruch 8 oder 9, **dadurch gekennzeichnet, dass** die Haupt-Kommunikationseinrichtung (318) dazu ausgebildet ist, mittels einer oder mehrerer Antennen (320) die Gegen-Kommunikationseinrichtung (25) in einer vorgegebenen Raumrichtung in einem vorgegeben Zeitraum in einer variablen Signalstärke anzusprechen.

11. Verfahren nach einem der Ansprüche 8 bis 10, **dadurch gekennzeichnet, dass** das Kochfeldgehäuse rechteckig ist und dass die Haupt-Kommunikationseinrichtung (318) und/oder die Zusatz-Kommunikationseinrichtungen (319) des Kochfelds (311), vorzugsweise sämtliche Kommunikationseinrichtungen (318, 319) des Kochfeldes (311), einen Abstand von weniger als 5 cm, insbesondere weniger als 2 cm, zu den vier Ecken des Kochfeldgehäuses unter der Kochfeldplatte (312) aufweisen, wobei insbesondere die Kommunikationseinrichtungen (318, 319) in den Ecken des Kochfeldgehäuses angeordnet sind.

12. Verfahren nach einem der Ansprüche 8 bis 11 **dadurch gekennzeichnet, dass** mehrere Töpfe mit jeweils einer Gegen-Kommunikationseinrichtung (25) auf der Kochfeldplatte (312) positioniert sind, wobei vorzugsweise deren Topfposition nacheinander bestimmt wird, insbesondere beginnend mit demjenigen Topf (22), dessen Vorhandensein oder Aufstellen auf die Kochfeldplatte (312) zuerst erkannt worden ist.

13. Verfahren nach Anspruch 12, **dadurch gekennzeichnet, dass** während der Bestimmung der Topfposition eines bestimmten Topfes (22) mit einer Gegen-Kommunikationseinrichtung (25) die anderen Gegen-Kommunikationseinrichtungen (25) der anderen Töpfe an der Abstandsmessung nicht teilnehmen.

14. Verfahren nach einem der vorhergehenden Ansprüche, **dadurch gekennzeichnet, dass** in einem weiteren Schritt von einer Heizeinrichtung (H), über der der Topf (22) positioniert erkannt worden ist oder bestimmt worden ist, ein bestimmtes Muster an Heizleistung erzeugt wird mit Variation der Zeit und/oder der Höhe der Heizleistung, und dieses Muster mit einer Temperaturmessung am Topf (22) verglichen wird, wobei in dem Fall, dass das Muster der Temperaturerfassung am Topf (22) nicht zu dem Muster der Erzeugung von Heizleistung an der Heizeinrichtung (H) passt, über der der Topf (22) als positioniert bestimmt worden ist, die Topfposition dieses Topfes (22) als nicht bekannt angenommen wird und ggf. eine Bedienperson zur neuen Bestimmung der Topfposition aufgefordert wird.

15. Kochfeld (11, 111, 211, 311) ausgebildet zum Durchführen des Verfahrens nach einem der vorhergehenden Ansprüche, wobei das Kochfeld (11, 111, 211, 311) aufweist:
- eine Kochfeldplatte (12, 112, 212, 312) zum Aufstellen des Topfes (22),
- mehrere Heizeinrichtungen (H), die nebeneinander unter der Kochfeldplatte (12, 112, 212, 312) angeordnet sind,
- eine Kochfeldsteuerung (16, 116, 216, 316),
- eine Haupt-Kommunikationseinrichtung (18, 118, 218, 318), die:
+ einen Sender und einen Empfänger aufweist, die zur Kommunikation mit einem Topf (22) mit einer Gegen-Kommunikationseinrichtung (25) ausgebildet ist,
+ zur Messung eines Abstands (d) zwischen sich und der Gegen-Kommunikationseinrichtung (25) des Topfes (22) ausgebildet ist,
+ zur Verwendung eines drahtlosen Kommunikationsprotokolls ausgebildet ist,
+ dazu ausgebildet ist, eine individuelle Kennung der Gegen-Kommunikationseinrichtung (25) zu empfangen und diese abzuspeichern in der Kochfeldsteuerung (16, 116, 216, 316),
+ zu der Kochfeldsteuerung (16, 116, 216, 316) gehört und/oder von dieser gesteuert wird,
- eine Topferkennungseinrichtung zum Erkennen des Vorhandenseins oder des Aufsetzens eines Topfes (22) auf der Kochfeldplatte (12, 112, 212, 312),
- einem Speicher in der Kochfeldsteuerung (16, 116, 216, 316) zum Abspeichern der individuellen Kennung der Gegen-Kommunikationseinrichtung (25).

## Claims

1. A method for determining a pot position of a pot (22) on a hob (11, 111, 211, 311), the hob (11, 111, 211, 311) comprising:
- a hob plate (12, 112, 212, 312) for positioning the pot (22),
- a plurality of heating devices (H) arranged side by side under the hob plate (12, 112, 212, 312)
- a hob control (16, 116, 216, 316),
- a main communication device (18, 118, 218, 318) comprising:
+ having a transmitter and a receiver adapted to communicate with a pot (22) having a mating communication device (25),
+ adapted to measure a distance (d) between itself and the mating communication device (25) of the pot (22),
+ is adapted to use a wireless communication protocol,
+ is adapted to receive an individual identifier of the mating communication device (25) and to store it in the hob control (16, 116, 216, 316),
+ belongs to and/or is controlled by the hob control (16, 116, 216, 316),
comprising the steps of:
- the hob (11, 111, 211, 311) and the main communication device (18, 118, 218, 318) are switched on and a pot (22) with a counter-communication device (25) is placed on the hob plate (12, 112, 212, 312), in particular in any position,
- the placing or presence of the pot (22) on the hob plate (12, 112, 212, 312) is detected, preferably by means of a pot detection device on the heating device (H) or by means of the heating device (H),
- after detection of the presence or placement of the pot (22) on the hob plate (12, 112, 212, 312), the distance (d) between the main communication device (18, 118, 218, 318) and the counter-communication device (25) of the pot (22) is measured,
- the measured distance (d) between the main communication device (18, 118, 218, 318) and the counter-communication device (25) is used to determine the pot position of the pot (22) on the hob (11, 111, 211, 311),
- the determined pot position is stored together with the individual identification of the counter-communication device (25) in the hob control (16, 116, 216, 316).

2. Method according to claim 1, **characterized in that** the counter-communication device (25) has a distance of less than 2 cm, in particular less than 1 cm, from a surface center point of a contact surface of the pot (22) on the hob plate (12, 112, 212, 312) in the projection direction from above.

3. Method according to claim 1 or 2, **characterized in that** the distance (d) between main communication device (18, 118, 218, 318) and counter-communication device (25) is measured by means of Bluetooth or by means of Ultra Wide Band radio, preferably by means of BLE, wherein, in particular for this purpose, a propagation time measurement of a signal from the main communication device (18, 118, 218, 318) to the counter-communication device (25) and from the latter back to the main communication device (18, 118, 218, 318) is carried out.

4. Method according to one of the preceding claims, **characterized in that** the detection of a presence or placement of the pot (22) with the counter-communication device (25) on the hob plate (12, 112, 212, 312) is detected by pot detection sensors and the hob plate (12, 112, 212, 312) and/or by pot detection means integrated in the heating devices (H), wherein in particular the heating devices (H) are induction heating coils adapted to detect a pot (22) positioned thereabove on the hob plate (12, 112, 212, 312), the detection of a presence or placement of the pot (22) preferably triggering the method for determining the pot position.

5. Method according to one of the preceding claims, **characterized in that**
- the heating devices (H) are spaced apart from one another by at least 4 cm, preferably the heating devices (H) being designed to heat a pot (22) placed above them as the only heating device (H),
- the distance (D) of each center of each heating device (H) to the main communication device (18, 118, 218, 318) is known and is different for each heating device (H), preferably different by at least 2 cm,
- the measured distance (d) between the main communication device (18, 118, 218, 318) and the counter-communication device (25) is compared with the known distances (D) of the centers of the heating devices (H) from the main communication device (18, 118, 218, 318),
- the pot (22) is considered to be positioned on that heating device (H) for which the distance (D) of its center to the main communication device (18, 118, 218, 318) has the smallest difference to the distance (d) between the main communication device (18, 118, 218, 318) and the counter communication device (25),
wherein in particular the hob (11, 111, 211, 311) comprises four, six or eight heating devices (H), which are preferably of the same type and/or size.

6. Method according to claim 5, **characterized in that** it is carried out only when only a single pot (22) is positioned on the hob (11, 111, 211, 311) with a counter-communication device (25), preferably when only a single pot (22) is positioned on the hob (11, 111, 211, 311) at all, in particular it being detected, by means of the pot detection device, whether only a single pot (22) is positioned on the hob (11, 111, 211, 311), and the method for determining the pot position being carried out only in this case.

7. Method according to claim 5 or 6, **characterized in that** a certain start position (SP) for a pot (22) to be placed on the hob plate (12, 112, 212, 312) with counter-communication device (25) is defined on the hob plate (12, 112, 212, 312), wherein preferably for confirmation of a correct placement of the pot (22) on the start position (SP) a comparison of a known distance (DSP) of the start position (SP) to the main communication device (18, 118, 218, 318) with the result of the distance measurement between the counter communication device (25) and the main communication device (18, 118, 218, 318) is performed,
wherein the following steps are then carried out
- the pot (22) with the counter-communication device (25) is moved to a new pot position on the hob plate (12, 112, 212, 312) desired by an operator,
- the pot recognition device recognizes the new pot position to which the pot (22) with the counter-communication device (25) has been displaced, wherein in particular a plausibility check is carried out on the basis of a known distance (D) of the heating device (H) belonging to the new pot position from the main communication device (18, 118, 218, 318) with a distance (d) of the counter-communication device (25) from the main communication device (18, 118, 218, 318).

8. Method according to one of the claims 1 to 4, **characterized in that**
- a plurality of additional communication devices (319) are arranged in the hob (311) below the hob plate (312), these additional communication devices (319) being designed for distance measurement in the same way as the main communication device (318),
- the distance (d) of the counter-communication device (25) to the main communication device (318) and additionally to at least one additional communication device (319), in particular additionally to several or all additional communication devices (319) of the hob (311), is determined and the pot position on the hob plate (312) is calculated therefrom when the position of the additional communication devices (319) in the hob (311) is known,
wherein preferably a total of at least two, in particular at least three, additional communication devices (319) are arranged in the hob (311), from whose distance measurements to the counter-communication device (25) of the pot (22) the pot position is determined, wherein preferably the pot position is determined by means of triangulation or trigonometry.

9. Method according to claim 8, **characterized in that** the main communication device (318), preferably also at least one additional communication device (319), is designed to determine a direction or an angle (α, α') of a signal from the counter-communication device (25) of the pot (22) to the main communication device (318).

10. Method according to claim 8 or 9, **characterized in that** the main communication device (318) is adapted to address the counter-communication device (25) by means of one or more antennas (320) in a predetermined spatial direction in a predetermined period of time in a variable signal strength.

11. Method according to one of the claims 8 to 10, **characterized in that** the cooking field housing is rectangular and that the main communication device (318) and/or the additional communication devices (319) of the hob (311), preferably all communication devices (318, 319) of the hob (311), have a distance of less than 5 cm, in particular less than 2 cm, from the four corners of the hob housing under the hob plate (312), in particular the communication devices (318, 319) being arranged in the corners of the hob housing.

12. Method according to one of the claims 8 to 11, **characterized in that** a plurality of pots, each with a counter-communication device (25), are positioned on the hob plate (312), their position preferably being determined one after the other, in particular starting with that pot (22) whose presence or positioning on the hob plate (312) has been detected first.

13. Method according to claim 12, **characterized in that** during the determination of the pot position of a certain pot (22) with a counter-communication device (25), the other counter-communication devices (25) of the other pots do not participate in the distance measurement.

14. Method according to one of the preceding claims, **characterized in that** in a further step a heating device (H), over which the pot (22) has been positio¬nally detected or determined, generates a certain pattern of heating power with variation of the time and/or the amount of heating power, and this pattern is compared with a temperature measurement at the pot (22), wherein in the case that the pattern of the temperature detection at the pot (22) does not match the pattern of the generation of heating power at the heating device (H) over which the pot (22) has been determined to be positio¬nized, the pot position of this pot (22) is assumed to be unknown and, if necessary, the pot position of the pot (22) is determined to be positive, an operator is prompted to determine the pot position again.

15. A hob (11, 111, 211, 311) adapted to perform the method according to one of the preceding claims, the hob (11, 111, 211, 311) comprising:
- a hob plate (12, 112, 212, 312) for placing the pot (22),
- a plurality of heating devices (H) arranged side by side under the hob plate (12, 112, 212, 312)
- a hob control (16, 116, 216, 316),
- a main communication device (18, 118, 218, 318) comprising:
+ having a transmitter and a receiver adapted to communicate with a pot (22) having a mating communication device (25),
+ adapted to measure a distance (d) between itself and the mating communication device (25) of the pot (22),
+ is adapted to use a wireless communication protocol,
+ is adapted to receive an individual identifier of the mating communication device (25) and store it in the hob control (16, 116, 216, 316),
+ belongs to and/or is controlled by the hob control (16, 116, 216, 316),
- a pot detection device for detecting the presence or placement of a pot (22) on the hob plate (12, 112, 212, 312),
- a memory in the hob control (16, 116, 216, 316) for storing the individual identification of the counter-communication device (25).

## Revendications

1. Procédé pour déterminer une position de casserole d'une casserole (22) sur une table de cuisson (11, 111, 211, 311), la table de cuisson (11, 111, 211, 311) comprenant :
- une plaque de cuisson (12, 112, 212, 312) pour placer la casserole (22),
- plusieurs dispositifs de chauffage (H) disposés côte à côte sous la plaque de cuisson (12, 112, 212, 312),
- une commande de table de cuisson (16, 116, 216, 316),
- un dispositif de communication principal (18, 118, 218, 318) qui comprend :
+ un émetteur et un récepteur, qui est conçu pour communiquer avec une casserole (22) avec un dispositif de communication réciproque (25),
+ est conçu pour mesurer une distance (d) entre lui-même et le dispositif de communication réciproque (25) de la casserole (22),
+ est conçu pour utiliser un protocole de communication sans fil,
+ est conçu pour recevoir un identifiant individuel du dispositif de communication réciproque (25) et pour le mémoriser dans la commande de table de cuisson (16, 116, 216, 316),
+ appartient à la commande de table de cuisson (16, 116, 216, 316) et/ou est commandée par celle-ci,
comprenant les étapes consistant à :
- la table de cuisson (11, 111, 211, 311) et le dispositif de communication principal (18, 118, 218, 318) sont allumés, et une casserole (22) avec un dispositif de communication réciproque (25) est placée sur la plaque de cuisson (12, 112, 212, 312), en particulier dans une position quelconque,
- la pose ou la présence de la casserole (22) sur la plaque de cuisson (12, 112, 212, 312) est détectée, de préférence par un dispositif de détection de casserole sur le dispositif de chauffage (H) ou au moyen du dispositif de chauffage (H),
- après avoir détecté la présence ou la pose de la casserole (22) sur la plaque de cuisson (12, 112, 212, 312), on mesure la distance (d) entre le dispositif de communication principal (18, 118, 218, 318) et le dispositif de communication réciproque (25) de la casserole (22),
- avec la distance mesurée (d) entre le dispositif de communication principal (18, 118, 218, 318) et le dispositif de communication réciproque (25), on détermine la position de la casserole (22) sur la table de cuisson (11, 111, 211, 311),
- la position déterminée de la casserole est mémorisée conjointement avec l'identification individuelle du dispositif de communication réciproque (25) dans la commande de table de cuisson (16, 116, 216, 316).

2. Procédé selon la revendication 1, **caractérisé en ce que** le dispositif de communication réciproque (25) présente, pour la casserole (22), dans la direction de projection depuis le haut, une distance inférieure à 2 cm, en particulier inférieure à 1 cm, par rapport à un centre de surface d'une surface d'appui de la casserole (22) sur la plaque de cuisson (12, 112, 212, 312).

3. Procédé selon la revendication 1 ou 2, **caractérisé en ce que** la distance (d) entre le dispositif de communication principal (18, 118, 218, 318) et le dispositif de communication réciproque (25) est mesurée par Bluetooth ou par radio ultra large bande, de préférence par BLE, une mesure du temps de propagation d'un signal depuis le dispositif de communication principal (18, 118, 218, 318) vers le dispositif de communication réciproque (25) et depuis celui-ci vers le dispositif de communication principal (18, 118, 218, 318) étant effectuée à cet effet.

4. Procédé selon l'une des revendications précédentes, **caractérisé en ce que** la détection de la présence ou de la mise en place de la casserole (22) avec le dispositif de communication réciproque (25) sur la plaque de cuisson (12, 112, 212, 312) est détectée par des capteurs de détection de casserole et la plaque de cuisson (12, 112, 212, 312) et/ou par des moyens de détection de casserole intégrés dans les dispositifs de chauffage (H), en particulier, les dispositifs de chauffage (H) sont des bobines de chauffage par induction conçues pour détecter une casserole (22) positionnée au-dessus sur la plaque de cuisson (12, 112, 212, 312), de préférence la détection de la présence ou de la pose de la casserole (22) déclenchant le procédé de détermination de la position de la casserole.

5. Procédé selon l'une des revendications précédentes, **caractérisé en ce que**
- les dispositifs de chauffage (H) sont espacés les uns des autres d'au moins 4 cm, de préférence les dispositifs de chauffage (H) étant adaptés pour chauffer une casserole (22) placé au-dessus en tant que seul dispositif de chauffage (H),
- la distance (D) entre chaque centre de chaque dispositif de chauffage (H) et le dispositif de communication principal (18, 118, 218, 318) est connue et est différente pour chaque dispositif de chauffage (H), de préférence différente d'au moins 2 cm,
- la distance mesurée (d) entre le dispositif de communication principal (18, 118, 218, 318) et le dispositif de communication réciproque (25) est comparée aux distances connues (D) des centres des dispositifs de chauffage (H) par rapport au dispositif de communication principal (18, 118, 218, 318),
- la casserole (22) est considérée comme étant positionnée sur le dispositif de chauffage (H) pour lequel la distance (D) de son centre au dispositif de communication principal (18, 118, 218, 318) présente la plus petite différence par rapport à la distance (d) entre le dispositif de communication principal (18, 118, 218, 318) et le dispositif de communication réciproque (25),
- la table de cuisson (11, 111, 211, 311) présentant en particulier quatre, six ou huit dispositifs de chauffage (H), qui sont de préférence de même type et/ou de même taille.

6. Procédé selon la revendication 5, **caractérisé en ce qu'**il n'est exécuté que si une seule casserole (22) avec un dispositif de communication réciproque (25) est positionnée sur la table de cuisson (11, 111, 211, 311), de préférence si une seule casserole (22) est positionnée sur la table de cuisson (11, 111, 211, 311), 111, 211, 311), le dispositif de reconnaissance de casserole permettant notamment de reconnaître si une seule casserole (22) est positionnée sur la table de cuisson (11, 111, 211, 311), et le procédé de détermination de la position de la casserole n'étant exécuté que dans ce cas.

7. Procédé selon la revendication 5 ou 6, **caractérisé en ce qu'**une position de départ déterminée (SP) est définie sur la plaque de cuisson (12, 112, 212, 312) pour une casserole (22) à poser avec un dispositif de communication réciproque (25), de préférence, pour confirmer une mise en place correcte de la casserole (22) sur la position de départ (SP), une comparaison est effectuée entre une distance connue (DSP) de la position de départ (SP) par rapport au dispositif de communication principal (18, 118, 218, 318) et le résultat de la mesure de la distance entre le dispositif de communication réciproque (25) et le dispositif de communication principal (18, 118, 218, 318),
les étapes suivantes étant alors exécutées :
- la casserole (22) avec le dispositif de communication réciproque (25) est déplacée vers une nouvelle position de la casserole sur la plaque de cuisson (12, 112, 212, 312) souhaitée par un opérateur,
- le dispositif de reconnaissance de casserole reconnaît la nouvelle position de casserole à laquelle la casserole (22) avec le dispositif de communication réciproque (25) a été déplacée, un contrôle de plausibilité étant notamment effectué sur la base d'une distance connue (D) du dispositif de chauffage (H) appartenant à la nouvelle position de casserole par rapport au dispositif de communication principal (18, 118, 218, 318) avec une distance (d) du dispositif de communication réciproque (25) par rapport au dispositif de communication principal (18, 118, 218, 318).

8. Procédé selon l'une des revendications 1 à 4, **caractérisé en ce que**
- plusieurs dispositifs de communication supplémentaires (319) sont disposés dans la table de cuisson (311) sous la plaque de cuisson (312), ces dispositifs de communication supplémentaires (319) étant conçus pour mesurer la distance de la même manière que le dispositif de communication principal (318),
- la distance (d) du dispositif de communication réciproque (25) par rapport au dispositif de communication principal (318) et en plus par rapport à au moins un dispositif de communication supplémentaire (319), en particulier en plus par rapport à plusieurs ou à tous les dispositifs de communication supplémentaires (319) de la table de cuisson (311), est déterminée et la position de la casserole sur la plaque de cuisson (312) est calculée à partir de cela lorsque la position des dispositifs de communication supplémentaires (319) dans la table de cuisson (311) est connue,
de préférence au moins deux, en particulier au moins trois, dispositifs de communication supplémentaires (319) étant disposés dans la table de cuisson (311), la position de la casserole étant déterminée à partir de leurs mesures de distance par rapport au dispositif de communication réciproque (25) de la casserole (22), la position de la casserole étant de préférence déterminée au moyen de la triangulation ou de la trigonométrie.

9. Procédé selon la revendication 8, **caractérisé en ce que** le dispositif de communication principal (318), de préférence également au moins un dispositif de communication supplémentaire (319), est conçu pour déterminer une direction ou un angle (α, α') d'un signal provenant du dispositif de communication réciproque (25) du pot (22) vers le dispositif de communication principal (318).

10. Procédé selon la revendication 8 ou 9, **caractérisé en ce que** le dispositif de communication principal (318) est conçu pour adresser, au moyen d'une ou de plusieurs antennes (320), le dispositif de communication réciproque (25) dans une direction spatiale prédéterminée dans un laps de temps prédéterminé avec une intensité de signal variable.

11. Procédé selon l'une des revendications 8 à 10, **caractérisé en ce que** l'enceinte de la table de cuisson est rectangulaire et **en ce que** le dispositif de communication principal (318) et/ou les dispositifs de communication supplémentaire (319) de la table de cuisson (311), de préférence tous les dispositifs de communication (318, 319) de la table de cuisson (311), présentent une distance inférieure à 5 cm, en particulier inférieure à 2 cm, par rapport aux quatre coins du boîtier de la table de cuisson sous la plaque de cuisson (312), les dispositifs de communication (318, 319) étant en particulier disposés dans les coins du boîtier de la table de cuisson.

12. Procédé selon l'une des revendications 8 à 11, **caractérisé en ce que** plusieurs casseroles sont positionnées sur la plaque de cuisson (312), chacune avec un dispositif de communication réciproque (25), leur position étant de préférence déterminée successivement, en commençant notamment par la casserole (22) dont la présence ou la mise en place sur la plaque de cuisson (312) a été détectée en premier.

13. Procédé selon la revendication 12, **caractérisé en ce que**, pendant la détermination de la position d'une casserole donnée (22) avec un dispositif de communication réciproque (25), les autres dispositifs de communication réciproque (25) des autres casseroles ne participent pas à la mesure de distance.

14. Procédé selon l'une des revendications précédentes, **caractérisé en ce que**, dans une étape supplémentaire, un dispositif de chauffage (H), par l'intermédiaire duquel le pot (22) a été détecté ou déterminé de manière positive, génère un modèle déterminé de puissance de chauffage avec une variation de la durée et/ou de la quantité de puissance de chauffage, et ce modèle est comparé à une mesure de température sur le pot (22), dans lequel, dans le cas où le modèle de détection de température sur le pot (22) ne correspond pas au modèle de production de puissance de chauffage sur le dispositif de chauffage (H) sur lequel le pot (22) a été déterminé comme étant positif, la position de ce casserole (22) est considérée comme étant inconnue et, le cas échéant, l'utilisateur est informé de la position de la casserole, un opérateur est invité à déterminer à nouveau la position de la casserole.

15. Une table de cuisson (11, 111, 211, 311) adaptée pour mettre en oeuvre le procédé selon l'une des revendications précédentes, ladite table de cuisson (11, 111, 211, 311) comprenant :
- une plaque de cuisson (12, 112, 212, 312) pour poser la casserole (22),
- plusieurs dispositifs de chauffage (H) disposés côte à côte sous la plaque de cuisson (12, 112, 212, 312),
- une commande de table de cuisson (16, 116, 216, 316),
- un dispositif de communication principal (18, 118, 218, 318) comprenant :
+ un émetteur et un récepteur adaptés pour communiquer avec une casserole (22) ayant un dispositif de communication réciproque (25),
+ est conçu pour mesurer une distance (d) entre lui-même et le dispositif de communication réciproque (25) du pot (22),
+ est conçu pour utiliser un protocole de communication sans fil,
+ est conçu pour recevoir un identifiant individuel du dispositif de communication réciproque (25) et pour le stocker dans la commande de la table de cuisson (16, 116, 216, 316),
+ appartenant à la commande de table de cuisson (16, 116, 216, 316) et/ou commandée par celle-ci,
- un dispositif de détection de casserole pour détecter la présence ou la mise en place d'une casserole (22) sur la plaque de cuisson (12, 112, 212, 312),
- une mémoire dans la commande de table de cuisson (16, 116, 216, 316) pour mémoriser l'identification individuelle du dispositif de communication réciproque (25).
